# EUROPÄISCHE PATENTSCHRIFT

(11) **EP 2 657 692 B1**
(45) Veröffentlichungstag und Bekanntmachung des Hinweises auf die Patenterteilung: **01.11.2017**
(21) Anmeldenummer: 13176847.5
(22) Anmeldetag: 12.09.2012
(51) Int. Cl.: G01N 27/22, A24C 5/34, G01N 33/36, G01N 33/487

(54) **Kapazitive HF-Strangmessvorrichtung und Maschine der Tabak verarbeitenden Industrie**
Capacitive HF strand measurement device and machine of the tobacco-processing industry
Dispositif de mesure de faisceau HF capacitif et machine de l'industrie du tabac

(30) Priorität: 20.09.2011 DE 102011083052
(43) Veröffentlichungstag der Anmeldung: 30.10.2013
(62) Teilanmeldung aus: 12184012.8
(73) Patentinhaber: Hauni Maschinenbau GmbH, 21033 Hamburg (DE)
(72) Erfinder: Schröder, Dierk, 22399 Hamburg (DE); Schreiber, Peter, 21465 Reinbek (DE); Khan, Rafael, 22041 Hamburg (DE)
(74) Vertreter: Seemann & Partner Patentanwälte mbB

(56) Entgegenhaltungen:
- DE-A1-102004 063 228
- GB-A- 785 068
- US-A1- 2007 138 132

## Beschreibung

Die Erfindung betrifft eine kapazitive HF-Strangmessvorrichtung, insbesondere zur kapazitiven Bestimmung wenigstens einer Eigenschaft eines Materialstrangs oder mehrerer Materialstränge der Tabak verarbeitenden Industrie, umfassend ein Gehäuse mit wenigstens einem Messkondensator, der durch einen Materialstrang durchsetzbar ist und der mit einem HF-Spannungssignal beaufschlagbar ist, sowie eine entsprechende Maschine der Tabak verarbeitenden Industrie.

Die Erfindung betrifft insbesondere das Gebiet der Strangbildung und Strangverarbeitung in der Tabak verarbeitenden Industrie, also die Erzeugung von Zigarettensträngen und Filtersträngen in Strangmaschinen. Beispielsweise wird ein Zigarettenstrang erzeugt, indem zunächst Tabak auf einen Strangförderer aufgeschauert wird, der Tabakstrang mit einem Umhüllungspapierstreifen umhüllt wird und anschließend von dem Tabakstrang Zigaretten mehrfacher Gebrauchslänge abgelängt werden. Das Bilden des Tabak- oder Filterstrangs und das anschließende Schneiden bzw. Ablängen des Strangs erfolgt mit hoher Geschwindigkeit. Typisch sind bei heutigen Zigaretten- und Filterherstellungsmaschinen Stranggeschwindigkeiten von 10 m/s, wobei bei 100 mm Abschnittslänge ein Schnitttakt von 100 pro Sekunde folgt.

Die Qualität der Zigaretten hängt vom Zustand des Tabaks im Zigarettenstrang ab. Aus diesem Grund ist vorgesehen, die Feuchtigkeit und die Dichte des Tabaks im Zigarettenstrang zu messen und insbesondere die Dichte zu regeln. Weiterhin wird im Falle von plötzlichen und kurzzeitigen Signalschwankungen auf das Vorhandensein von Fremdkörpern geschlossen, wobei die entsprechenden Strangabschnitte nachfolgend ausgesondert werden.

Dies geschieht in modernen Zigarettenherstellungsmaschinen mit der Hilfe von Mikrowellenmesseinrichtungen, die wenigstens ein Mikrowellen-Resonatorgehäuse aufweisen, durch das der Tabakstrang hindurchgeführt wird.

Auch die Messung von Strangeigenschaften bei deutlich niedrigeren Frequenzen ist bekannt. So ist aus DE 10 2004 063 228 B4 eine Messvorrichtung zur Bestimmung einer dielektrischen Eigenschaft, insbesondere der Feuchte und/oder Dichte, eines Produkts, insbesondere von Tabak, Baumwolle oder einem anderen Faserprodukt, mit einem Messkondensator, einer Einrichtung zur Erzeugung eines Hochfrequenzfeldes in dem Messkondensator, das durch ein Produkt, das in einem Messvolumen der Messvorrichtung angeordnet ist, beeinflusst wird, bekannt. Es ist außerdem eine Schaltungseinrichtung umfasst, die zur Bestimmung geeigneter Messgrößen des von dem Produkt beeinflussten Hochfrequenzfeldes eingerichtet ist. Die Schaltungseinrichtung ist bei der verwendeten Messfrequenz des Hochfrequenzfeldes nicht resonant ausgebildet und die Messung beruht auf der Ausbreitung einer laufenden Hochfrequenzwelle in dem Messkondensator. Die Schaltungseinrichtung ist zur Bestimmung zweier wechselseitig unabhängiger, von der Amplitude und der Phase der von dem Produkt beeinflussten Hochfrequenzwelle abhängiger Messgrößen eingerichtet.

Gemäß diesem Stand der Technik, wie auch in der vorliegenden Erfindung, bedeutet der Begriff "Hochfrequenz" bzw. "HF" grundsätzlich, in Abgrenzung vom Mikrowellenbereich, Frequenzen unterhalb von 100 MHz. In der Regel beträgt die Frequenz mehr als 10 kHz, vorzugsweise mehr als 100 kHz. Weiter vorzugsweise beträgt die Frequenz wenigstens 1 MHz, insbesondere für Tabak, weiter vorzugsweise mehr als 5 MHz, da zu niedrigeren Frequenzen hin eine hinreichend genaue Messung nur in einem zunehmend eingeschränkten Messbereich möglich ist.

Aus DE 10 2004 063 229 B4 ist außerdem eine weitere Messvorrichtung auf der Grundlage eines HF-Messkondensators offenbart, mit der Fremdkörper in einem Produkt, insbesondere in Tabak, Baumwolle oder einem anderen Faserprodukt, erkannt werden.

Allgemein wird bei einer typischen kapazitiven Messung ein Anschluss des Messkondensators an ein Massepotential angeschlossen. Mit dem anderen Anschluss des Messkondensators wird eine Wechselspannungsquelle verbunden und der Strom gemessen, der über die Messkapazität gegen das Massepotential fließt. Werden auf diese Weise Strom und Spannung an der Messkapazität nach Betrag und Phase bestimmt, können der Betrag der Messkapazität und der Verlustfaktor prinzipiell bestimmt werden. Bei vergleichsweise großen zu messenden Messkapazitäten ist dieses Messverfahren über einen weiten Frequenzbereich gut geeignet.

Sollen sehr kleine Messkapazitäten, die ca. 1 pF oder weniger betragen, gemessen werden, kommt ein unerwünschter Effekt zum Tragen, der die Messung nach diesem Verfahren ungenau werden lässt. Da sich bei der Anordnung gemäß DE 10 2004 063 228 B4 und DE 10 2004 063 229 B4 Streukapazitäten, die typischerweise in der Größenordnung von einigen pF (Pikofarad) liegen, prinzipiell nicht vermeiden lassen, wird neben dem Strom, der über die Messkapazität fließt, zusätzlich der Strom gemessen, der über die Streukapazitäten fließt. Da sich diese beiden Ströme nicht sauber trennen lassen, ist eine ungenaue Messung von kleinen Messkapazitäten die Folge. Aufgrund der geometrischen Gegebenheiten am Filter- und Zigarettenstrang beträgt die zu bestimmende Messkapazität deutlich unter 1 pF. Dieser Wert soll zudem sehr hoch aufgelöst werden. Außerdem soll der Verlustfaktor mit hoher Genauigkeit bestimmt werden.

Um dieses Problem mit den Streukapazitäten zu umgehen, wird der Messkondensator gemäß DE 10 2004 063 228 B4 und DE 10 2004 063 229 B4 in einer Operationsverstärkerschaltung als Differenzier- oder Integrierglied betrieben. Da der eine Anschluss der Messkapazität in dieser Anordnung niederohmig an eine Spannungsquelle angeschlossen ist, der andere Anschluss der Messkapazität aber infolge der Gegenkopplung des Operationsverstärkers virtuell auf Massepotential gehalten wird, können die Einflüsse der Streukapazitäten in diesen Anordnungen deutlich reduziert werden. Mit dieser Schaltung werden derzeit Messkapazitäten herab zu ca. 1 pF und bis zu Frequenzen von ca. 100 KHz gemessen. Außerhalb dieses Bereichs ist die Genauigkeit des darin beschriebenen Verfahrens eingeschränkt.

Der Erfindung liegt in Anbetracht dieses Standes der Technik die Aufgabe zugrunde, eine kapazitive Strangmessvorrichtung und ein Messverfahren zur Verfügung zu stellen, mit denen eine Messung der Kapazität eines Messkondensators bei Materialsträngen der Tabak verarbeitenden Industrie mit weiter verbesserter Genauigkeit und bei höheren HF-Frequenzen, als dies bislang möglich war, ermöglicht werden.

Diese Aufgabe wird durch eine kapazitive HF-Strangmessvorrichtung, insbesondere zur kapazitiven Bestimmung wenigstens einer Eigenschaft eines Materialstrangs oder mehrerer Materialstränge der Tabak verarbeitenden Industrie, umfassend ein Gehäuse mit wenigstens einem Messkondensator, der durch einen Materialstrang durchsetzbar ist und der mit einem HF-Spannungssignal beaufschlagbar ist, gelöst, die dadurch weitergebildet ist, dass der Messkondensator zwei einander gegenüberliegende, insbesondere kreisringförmige, Kondensatorflächen aufweist, die jeweils zentrale Durchtrittsöffnungen für einen Materialstrang aufweisen, wobei wenigstens eine der beiden Kondensatorflächen in einem ringförmigen Bereich um die Durchtrittsöffnung herum in einen umlaufenden und radial nach innen überstehenden Kragen mündet oder als ein in einem ringförmigen Bereich um die Durchtrittsöffnung herum umlaufender und radial nach innen überstehender Kragen ausgebildet ist, dessen innere Öffnung eine Durchtrittsöffnung für den Materialstrang bildet und der eine von dem Zwischenraum zwischen den Kondensatorflächen abgewandte Rückseite aufweist, an der sich der Innendurchmesser des Gehäuses gegenüber dem Durchmesser der Durchtrittsöffnung unter Bildung einer ringförmigen Hinterdrehung öffnet.

Ein Materialstrang der Tabak verarbeitenden Industrie ist im Rahmen der Erfindung insbesondere ein Tabakstrang oder ein Filterstrang.

Eine zu bestimmende Eigenschaft eines Materialstrangs ist im Rahmen der Erfindung insbesondere eine Feuchte und/oder Dichte des Materialstrangs und/oder die Masse eines Zusatzstoffes und/oder eine Masse und/oder Position eines in den Materialstrang eingebetteten Elements bzw. Körpers.

Diese erfindungsgemäße Lösung beruht auf dem Grundgedanken, dass durch die Verwendung eines umlaufenden und radial nach innen überstehenden Kragens sowie der Hinterdrehung hinter dem Kragen anstelle der zuvor verwendeten rohrförmigen Erstreckung eine gezielte Beeinflussung der Feldgeometrie im Bereich des Materialstrangs erfolgt, wodurch das Feld tiefer und stärker gebündelt als bisher in den Materialstrang eindringt. Unter einer Hinterdrehung wird im Rahmen der Erfindung ein ringförmiger Hohlraum um den Materialstrang im Kondensatorgehäuse verstanden.

Der Kragen stellt eine Potentialspitze dar, von dem viele Feldlinien ausgehen. Da der Kragen mit seiner Kante nach innen, also zum Materialstrang hin, gerichtet ist, verlaufen die Feldlinien gebündelt in den Materialstrang hinein und dringen somit auch tiefer in den Materialstrang ein als dies mit einer rohrförmigen Erstreckung, die parallel zum Materialstrang ausgerichtet ist, möglich ist. Gleichzeitig bündelt die Rückseite des jeweiligen Kragens die zurücklaufenden Feldlinien, so dass die Erstreckung des Hauptteils des elektromagnetischen Wechselfeldes in Längsrichtung des Materialstrangs sehr viel stärker gebündelt ist als dies zuvor der Fall war. Die Rückseite des Kragens zwingt die Feldlinien zurück, so dass sie sich nicht weit in die Durchtrittsöffnungen für den Materialstrang hinein erstrecken können. Vorzugsweise weisen beide Kondensatorflächen entsprechende Kragen auf.

Der oder die Kragen mit den entsprechenden Hinterdrehungen sorgen gleichzeitig dafür, dass die Eindringtiefe des HF-Strahlungsfeldes in den Materialstrang erhöht wird und dass die Erstreckung des HF-Strahlungsfeldes in Strangrichtung stark begrenzt wird. Damit wird sowohl die Ortsauflösung als auch die Sensitivität für die Strangmasse bzw. für Fremdkörper im Zentrum des Stranges erhöht.

Erfindungsgemäß wird unter einem nach innen überstehenden Kragen ein Kragen oder eine flächige umlaufende Verlängerung der jeweiligen Kondensatorfläche verstanden, die gegenüber dem weiteren Verlauf des Gehäuses außerhalb des Messkondensators weiter nach innen vorsteht als die Innenwand des weiteren Gehäuses, so dass sich die ringförmige Hinterdrehung jenseits des Kragens ergibt. Die Kondensatorfläche kann auch vollständig als Kragen ausgebildet sein. Auch diese Maßnahme sorgt für eine Bündelung der Feldlinien auf dem Kragen und dafür, dass wenige Feldlinien von der Innenfläche der Hinterdrehung ausgehen.

Vorzugsweise sind eine oder mehrere genauigkeitsbestimmende elektronische Komponenten im Gehäuse angeordnet, wobei das Gehäuse eine oder mehrere Kammern aufweist, in denen jeweils eine oder mehrere genauigkeitsbestimmende elektronische Messkomponenten angeordnet sind, insbesondere einer oder mehrere HF-Spannungsquellen, Auswertungsschaltungen und/oder Regelungsschaltungen, wobei das Gehäuse einen Grundkörper und einen oder mehrere Deckel umfasst, die zu dem Gehäuse zusammensetzbar sind, wobei insbesondere die Kammer oder die Kammern als Aussparungen im Grundkörper und/oder in dem Deckel oder den Deckeln ausgebildet sind. Damit wird erreicht, dass genauigkeitsbestimmende elektronische Komponenten von äußeren Störeinflüssen abgeschirmt werden, indem sie im Gehäuse der kapazitiven HF-Strangmessvorrichtung angeordnet werden. Es wird ein konsequenter Aufbau mit weitgehender Integration der Messkomponenten in das Gehäuse der Strangmessvorrichtung vorgenommen, so dass diese einerseits über sehr kurze Signalwege mit dem Messkondensator verbunden sind und weitere Leitungsverbindungen eingespart werden. Dies kommt der Signalqualität zugute.

Das HF-Messsystem mit dem Messkondensator und den Schaltungskomponenten ist außerdem in einem gemeinsamen Gehäuse untergebracht, so dass es gegenüber äußeren Störeinflüssen als Einheit abgeschirmt wird, wenn das Gehäuse metallisch oder metallisiert ist. Außerdem befindet sich die Elektronik mit dem Messkondensator und dem Gehäuse im thermischen Gleichgewicht, so dass die Messsignale auch nicht durch Temperaturunterschiede zwischen Messkondensator und elektronischen Komponenten negativ beeinflusst werden.

Das Gehäuse kann ein Material mit geringer Temperaturausdehnung aufweisen und/oder es kann eine Temperaturregeleinrichtung in und/oder am Gehäuse ausgebildet sein, mittels der die Temperatur des Gehäuses im Wesentlichen auf einem konstanten vorbestimmten oder vorbestimmbaren Wert haltbar ist. Somit werden zusätzlich zu einer passiven oder aktiven Bewahrung der Geometrie des Messkondensators und des Gehäuses durch Auswahl eines Materials mit geringem Temperaturkoeffizienten oder durch aktive Temperaturregelung weitere Maßnahmen zur Stabilisierung der Messung umgesetzt und werden Einflüsse ausgeschaltet, die die Stabilität negativ beeinflussen können und deshalb zu einer Beeinträchtigung der Messgenauigkeit führen würden. Dies betrifft auch die im Gehäuse angeordneten elektronischen Komponenten, die ebenfalls andernfalls externen Störeinflüssen ausgesetzt sind.

Mit der Temperaturregelung bzw. der Auswahl von Materialien mit niedrigem Temperaturausdehnungskoeffizienten und der Integration der elektronischen Komponenten in das Gehäuse treten mechanische Spannungen bei Temperaturänderungen nicht oder nur noch in geringem Maße auf. Solche Effekte bewirken Setzerscheinungen, die im Laufe des Betriebs der Messeinrichtung zu Genauigkeitseinbußen führen. Durch Kräfte, die beispielsweise durch Schraubverbindungen verursacht werden, treten daher im Laufe der Zeit infolge von Maschinenvibrationen Setzerscheinungen oder Drift auf, die zu einer Lageveränderung der Kondensatorflächen des Messkondensators führen können sowie in der Folge zu einer Änderung der Messkapazität. Außerdem dehnen sich infolge der Temperaturdifferenz zwischen der Montage bei Raumtemperatur und dem Betrieb bis zu ca. 65 °C Messkondensator und andere Komponenten um mehrere hundertstel Millimeter unterschiedlich aus, was an den Verbindungsstellen entsprechende mechanische Spannungen zur Folge hat, die ebenfalls zu Setzerscheinungen bzw. Drift führen.

Insofern elektronische Komponenten im Gehäuse integriert sind und einen anderen Temperaturausdehnungskoeffizienten aufweisen als das Gehäuse selbst, ist die Verbindung dieser Komponenten mit dem Gehäuse vorzugsweise dergestalt, dass unterschiedliche Wärmeausdehnungen durch die Weichheit der Verbindung ausgeglichen werden und nicht zu einer Verspannung und Verformung des Gehäuses selbst führen. Gleichzeitig betrifft eine Temperaturregelung, d.h. eine Konstanthaltung der Temperatur, nicht nur das Gehäuse, sondern auch die Messelektronik, was wiederum eine Konstanz der Arbeitsweise der elektrischen Komponenten sicherstellt und hilft, Drift zu vermeiden.

Als genauigkeitsbestimmende elektronische Komponenten sind wenigstens eine HF-Spannungsquelle und/oder eine Operationsverstärkerschaltung und/oder eine Regelvorrichtung und/oder eine Auswertevorrichtung im Gehäuse angeordnet. Somit sind als elektronische Komponenten HF-erzeugende Komponenten und/oder Messkomponenten umfasst.

Dadurch, dass das Gehäuse ein oder mehrere voneinander in Bezug auf HF-Streufilter abgeschirmte Kammern aufweist, in denen jeweils eine oder mehrere genauigkeitsbestimmende elektronische Messkomponenten angeordnet sind, wird in den Kammern eine gegenseitige Beeinflussung verschiedener elektronischer Komponenten weitgehend unterdrückt. So wird die mit der Streuung einhergehende negative Beeinflussung der Messgenauigkeit dadurch erheblich unterdrückt, dass die primären Messschaltungskomponenten in einer Kammer bzw. in jeweils einzelnen Kammern untergebracht sind, die die Störung von Schaltungskomponenten in benachbarten Kammern weitgehend verhindern. So wird vorzugsweise beispielsweise die Einheit, mit der HF-Spannungen generiert werden, von den Messeinheiten und Auswerteeinheiten in getrennten Kammern abgeschirmt.

Da das Gehäuse einen Grundkörper und einen oder mehrere Deckel umfasst, die zu dem Gehäuse zusammensetzbar sind, wobei insbesondere die Kammer oder die Kammern als Aussparungen im Grundkörper und/oder in dem Deckel oder den Deckeln ausgebildet sind, ist eine einfach herzustellende und kompakte Bauweise des Gehäuses verwirklicht. Der Grundkörper und der oder die Deckel sind auf einfache Weise herstellbar und miteinander verbindbar.

Vorzugsweise ist die Kammer oder sind die Kammern als Aussparungen im Grundkörper und/oder in dem oder den Deckeln ausgebildet, wobei zwischen den Kammern und/oder zwischen der Kammer und dem Messkondensator Zwischenwände angeordnet sind. Die Zwischenwände kapseln die einzelnen Kammern und damit die darin angeordneten elektronischen Komponenten voneinander ab und verhindern so eine gegenseitige Beeinflussung bzw. ein Übersprechen von Signalen.

Es kann eine Kammer vorgesehen sein, in der insbesondere eine Spannungsversorgung und/oder eine Temperaturregeleinrichtung angeordnet sind. Damit sind weitere Komponenten für den Betrieb und die Versorgung sowohl der HF-Strangmessvorrichtung als auch der Spannungsquelle und der Messkomponenten in die erfindungsgemäße HF-Strangmessvorrichtung integriert und bilden eine kompakte Einheit.

Durch die Kompaktheit der Messvorrichtung werden lange Signallaufwege, Kabelverbindungen, zusätzliche Verbindungsstellen und weitere Schwachstellen im Signalverlauf eingespart, so dass durch die Einsparung an Kontaktstellen die Signalqualität und die Messqualität erhöht wird.

Im Grundkörper oder im ersten Deckel können zwei oder mehr Ebenen von Kammern angeordnet sein. Dies dient einer weiteren Kompaktifizierung der Vorrichtung. Es ist auch möglich, Kammern in verschiedenen Ebenen im Grundkörper und im ersten Deckel anzuordnen. So ist es beispielsweise erfindungsgemäß umfasst, in einer Kammer in einer Ebene im ersten Deckel einen Teil einer Auswerteelektronik anzuordnen, während in einer weiteren Kammer, die in einer weiteren Ebene im ersten Deckel oder im Grundkörper darüber einen weiteren Teil der Mess- und gegebenenfalls auch der Auswerteelektronik anzuordnen. Es ist hierbei ausdrücklich erfindungsgemäß umfasst, dass die mehreren Ebenen von Kammern nur im Grundkörper, nur im ersten Deckel oder auf den Grundkörper und den ersten Deckel verteilt angeordnet sind.

Der Grundkörper und der erste Deckel, insbesondere auch die Abdeckung, insbesondere auch der zweite Deckel, können ein oder mehrere Materialien mit im Wesentlichen gleicher, insbesondere geringer, Temperaturausdehnung aufweisen, wobei insbesondere ein Temperaturausdehnungskoeffizient des oder der Materialien einen Wert von 25*10⁻⁶ K⁻¹ nicht übersteigt, insbesondere im Wesentlichen kleiner ist als 2,0*10⁻⁶ K⁻¹, insbesondere kleiner als 0,1*10⁻⁶ K⁻¹. Das Material Invar hat beispielsweise einen Temperaturausdehnungskoeffizienten von etwa 2,0*10⁻⁶ K⁻¹. Die Glaskeramik Zerodur® hat einen Temperaturausdehnungskoeffizienten von weniger als 0,1*10⁻⁶ K⁻¹. Bei Verwendung eines nichtleitenden Kunststoffmaterials, glaskeramischen Materials oder keramischen Materials sind die Wandflächen innerhalb des Gehäuses und der Kammern mit einer metallischen Schicht, beispielsweise Gold, überzogen, um die Ausbreitung von HF-Strahlung nach außerhalb des Kondensators bzw. der Kammern zu verhindern.

Wegen ihrer guten spanenden Bearbeitungsmöglichkeiten werden auch Aluminium und einige wärmebeständige Kunststoffe mit einem relativ geringen Temperaturausdehnungskoeffizienten, wie beispielsweise Polyetheretherketon (PEEK) oder Polybenzimidazol (PBI) als bevorzugtes Material für das Gehäuse vorgeschlagen. Aluminium hat beispielsweise einen Temperaturausdehnungskoeffizienten von 23,8*10⁻⁶ K⁻¹, für PEEK werden von den Herstellern Werte von 17*10⁻⁶ K⁻¹ bis 25*10⁻⁶ K⁻¹ angegeben. Auch PBI hat einen vergleichbaren Temperaturausdehnungskoeffizienten von 25*10⁻⁶ K⁻¹. Eine Kombination der genannten Werkstoffe Aluminium, PEEK und PBI ist für bestimmte Anwendungsfälle aufgrund der sehr ähnlichen Temperaturausdehnungskoeffizienten ebenfalls vorteilhaft, beispielsweise bei einer gegebenenfalls notwendigen Kombination von leitenden und nichtleitenden Materialien.

Eine weitere Verbesserung der Temperaturkonstanz ist gegeben, wenn das Gehäuse ein gut wärmeleitendes Material aufweist oder von einem gut wärmeleitenden Material umgeben ist. Ein gut wärmeleitendes Material ist beispielsweise Aluminium. Das gut wärmeleitende Material dient der Übertragung und dem Ausgleich von Wärme bzw. der Temperatur des Gehäuses und der darin aufgenommenen elektronischen Komponenten. Andererseits ist beispielsweise Zerodur® ein schlecht wärmeleitfähiges Material, so dass ein aus Zerodur® hergestelltes Gehäuse für einen Temperaturausgleich ein gut wärmeleitendes Material beinhalten oder davon umgeben sein kann.

Um Verformungen des Gehäuses, auch aufgrund externer Einflüsse, zu minimieren, ist das Gehäuse im Wesentlichen an mechanisch weichen Verbindungselementen, insbesondere Schrauben, Bolzen oder Stehbolzen, aufgehängt, die thermische und/oder mechanische Verspannungen aufnehmen.

Vorzugsweise weist ein Schutzrohr aus einem nichtleitenden Material, insbesondere Kunststoff, insbesondere PEEK, durch den der Materialstrang durch den Messkondensator führbar ist, innerhalb der Messzone und/oder im Gehäuse eine geringe Wandstärke auf als außerhalb des Gehäuses und/oder ist im Gehäuse enger toleriert als außerhalb des Gehäuses. Ein solches Schutzrohr wird auch als Tubus bezeichnet. Für die Verwendung von PEEK spricht neben seiner Eigenschaft als Nichtleiter auch die hohe Temperaturbeständigkeit. Da das Schutzrohr mit dem Tabakstrang oder Filterstrang während deren Herstellung in Berührung kommen kann, spricht für die Verwendung von PEEK ferner, dass dieser Kunststoff in einigen Varianten der Richtlinie der Europäischen Union für Kunststoffe mit Lebensmittelkontakt und den entsprechenden Vorgaben der U.S. FDA (USamerikanische Food and Drug Administration) entspricht.

Da auch über den Tubus unzulässige Kräfte auf das Gehäuse übertragen werden können, ist vorzugsweise außerhalb des Gehäuses ein langes Stück des Tubus vorgesehen, das weit toleriert ist, so dass die Kräfte, die sich auf diesem Stück infolge von geringen Lageverschiebungen ergeben können, minimal sind. Die im Gehäuseinneren bzw. in der Messzone verringerte Wandstärke des Tubus erhöht die Empfindlichkeit der Mikrowellenmessung in diesem Bereich.

Der Aufbau des erfindungsgemäßen Systems erlaubt den Einsatz sowohl in Einstrangmaschinen als auch in Zweistrangmaschinen oder Mehrstrangmaschinen, so dass nur noch ein Typ von HF-Strangmessvorrichtung für alle Maschinentypen benötigt wird. Hierbei werden die Abmessungen, insbesondere die Strangabstände einer Zweistrangmaschine berücksichtigt.

Der Aufbau des erfindungsgemäßen Systems erlaubt zudem in vorteilhafter Weise den Einsatz als so genanntes Zweifrequenzen-Tandemsystem. Hierbei werden je Materialstrang zwei im Wesentlichen baugleiche Systeme, insbesondere unmittelbar, hintereinander angeordnet, wobei die beiden Systeme bei abweichenden Frequenzen betrieben werden. Die Abweichung beträgt insbesondere einen Faktor 10 oder mehr.

Somit entsteht eine bauraumsparende und kostensparende Lösung, um verschiedene Mess- und/oder Prüfaufgaben zeitgleich oder nahezu zeitgleich zu lösen, beispielsweise Dichte-, Masse- und/oder Feuchtemessung des Materialstrangs, Bestimmung der Masse eines gleichmäßig verteilten eingebundenen flüssigen oder festen Zusatzstoffes und/oder die Erkennung von Fremdkörpern und/oder von in den Materialstrang systematisch eingebrachten Pellets oder Kapseln hinsichtlich der Position, insbesondere bei gleichzeitiger Bestimmung der lokalen Masse beispielsweise der Pellets oder Kapseln.

Durch diesen neuen erfindungsgemäßen Aufbau wird im Vergleich zum Stand der Technik eine höhere Systemstabilität erreicht. Hierdurch müssen Korrekturen der Messkalibrierung sowie Reparaturen seltener durchgeführt werden. Außerdem wird die Messgenauigkeit verbessert. Durch die höhere Stabilität und die selteneren Ausfälle werden die Betreuungskosten reduziert. Durch eine Standardisierung werden außerdem Konstruktions- und Serienbetreuungskosten reduziert.

Die strangweise Trennung der erfindungsgemäßen Systeme und der interne Aufbau verhindern nachhaltig eine gegenseitige Signalbeeinflussung zwischen den Systemen beider Materialstränge.

Vorzugsweise wird die Hinterdrehung oder werden die Hinterdrehungen in axialer Richtung, also in Strangrichtung, durch einen oder mehrere radial nach innen überstehende Gehäuseabschnitte abgeschlossen. Dies dient einerseits zur verbesserten Verhinderung eines HF-Strahlungsfeldaustritts aus dem Gehäuse und andererseits der mechanischen Stützung des Materialstrangs bzw. eines Schutzrohrs für den Materialstrang. Dabei ist die Hinterdrehung radial nach innen üblicherweise durch ein Schutzrohr abgeschlossen.

Vorzugsweise ist vorgesehen, dass der Kragen oder die Kragen eine im Querschnitt gerade oder gebogene ringförmig um die Durchtrittsöffnung herum laufende Fläche bildet oder bilden. Durch die geeignete Wahl der Geometrie des Kragens lassen sich Parameter wie Größe des Kondensatorspaltes, Ausrichtung des Feldes und Begrenzung der Ausbreitung des HF-Strahlungsfeldes in Strangrichtung sehr flexibel festlegen. Eine vorteilhafterweise abgerundete Endkante vereinigt besonders viele Feldlinien, so dass eine starke Bündelung des HF-Strahlungsfeldes an den abgerundeten Kanten auftritt. Damit werden auch besonders viele Feldlinien in den Materialstrang hineinprojiziert.

Zwischen der Kondensatorfläche und der Vorderseite des Kragens ist ein Winkel eingeschlossen. Damit ein solcher Kragen in Richtung auf den Materialstrang, also nach innen, übersteht, muss dieser Winkel größer als 90° sein. Ein Winkel von 180° bedeutet, dass der Kragen die Kondensatorfläche fortsetzt. Im Fall, dass der Winkel zwischen 90° und 180° ist, ist der Kondensatorspalt am Ort des Kragens verschmälert. Ein Winkel von 180° ergibt eine maximale Projektion des HF-Wellenfeldes in Zentrum des Materialstrangs hinein. Bei einer bevorzugten Auswahl des Winkels von etwa 135° weisen die Kragen aufeinander zu, so dass eine starke Bündelung des HF-Feldes erreicht wird und verhindert wird, dass das HF-Feld sich in Strangrichtung weiter ausbreitet. Vorzugsweise verlängert der Kragen die Kondensatorfläche oder eine Endfläche oder schließt einen Winkel mit der Kondensatorfläche oder Endfläche von mehr als 90°, insbesondere bis zu 225°, insbesondere zwischen 120° und 150°, ein. Im Falle einer Kondensatorelektrode, bei der nur der Kragen elektrisch leitend ist, ist eine ähnliche Geometrie vorteilhaft, bei der ein entsprechender Winkel gegenüber entweder einer Endfläche oder, um 90° gedreht, gegenüber der Strangrichtung eingestellt ist. In einem Fall, in dem die Kondensatorelektrode nur durch einen Kragen gebildet ist, ersetzt die nicht metallisierte Endfläche die metallisierte Kondensatorfläche.

Vorzugsweise sind beide Kondensatorflächen mit entsprechenden Kragen und Hinterdrehungen ausgebildet. Die Länge der Hinterdrehungen in Strangrichtung ist vorzugsweise wenigstens so lang wie der Kondensatorspalt. Die Tiefe der Hinterdrehung beträgt vorzugsweise wenigstens ein Zehntel, ferner vorzugsweise wenigstens ein Fünftel oder mehr der Länge des Kondensatorspalts. Diese Werte stellen sicher, dass das HF-Feld sich im Kondensatorspalt bündelt und nicht wesentlich in Strangrichtung aus dem Messkondensator austritt.

In einer vorteilhaften Weiterbildung verläuft ein Schutzrohr für den Materialstrang durch die Durchtrittsöffnungen und den Messkondensator, wobei die Wandstärke des Schutzrohrs auf den durch den Messkondensator verlaufenden Abschnitt geringer ist als außerhalb des Messkondensators. Dies betrifft insbesondere den Abschnitt des Schutzrohrs, der zwischen den Kragenkanten, also im Kondensatorspalt, verläuft. Das Schutzrohr besteht vorzugsweise aus einem nichtleitenden Material mit kleiner Dielektrizitätskonstante und geringem Verlustfaktor, wie beispielsweise PEEK, das insbesondere für HF-Strahlung weitgehend transparent ist. Dies wird dadurch gefördert, dass im Bereich des Kondensatorspaltes die Wandstärke reduziert ist.

Bei der zuvor beschriebenen HF-Strangmessvorrichtung mit kompakter Bauweise und/oder mit Kragen versehenen Kondensatorflächen bzw. Kondensatorelektroden ist vorzugsweise vorgesehen, dass wenigstens eine Kondensatorelektrode einen Träger oder ein Trägersubstrat aus nichtleitendem Material aufweist, insbesondere aus Kunststoff oder Keramiksubstrat, dessen Kondensatorfläche metallisiert ist. Die Träger sind auf dem, insbesondere metallischen, Grundkörper vorzugsweise angeordnet. Der Grundkörper bzw. das Gehäuse weisen entsprechende Aufnahmen für die Kondensatorelektroden auf, mit denen die nichtleitenden Träger und damit die Kondensatorflächen in genauer definierten Positionen angeordnet und gehalten werden. Die Metallisierung besteht vorzugsweise aus einer Schicht eines Metalls, das hinreichend gut leitend und vorzugsweise korrosionsbeständig ist. Die Leitfähigkeit sollte insbesondere mehr als 15 S/m betragen.

Entsprechende nichtleitende bzw. nichtmetallische Trägermaterialien sind im Rahmen der Erfindung insbesondere Keramik oder wärmebeständige Kunststoffe mit einem relativ geringen Temperaturausdehnungskoeffizienten wie PEEK oder PBI oder andere geeignete Kunststoffe. Der Begriff der metallisierten Kondensatoroberfläche ist in diesem Zusammenhang weit gefasst zu verstehen und umfasst im Rahmen der Erfindung sowohl eine aufgedampfte Metallschicht als auch eine geklebte folienartige Beschichtung als auch insbesondere beispielsweise einen kreisförmigen, formschlüssig eingebetteten Metallring. Ein solcher, insbesondere konischer, Metallring kann an einen Kragen anschließen oder selbst den Kragen bilden.

Ein Anschluss einer Kondensatorfläche ist vorzugsweise durch den nichtmetallischen Träger oder das Trägersubstrat der Kondensatorelektrode geführt. Unter dem Begriff des Trägers der Kondensatorelektrode wird ebenfalls ein Trägersubstrat verstanden.

In einer alternativen Ausgestaltung ist ebenfalls vorzugsweise ein Teil der Außenfläche des Trägers oder des Trägersubstrats, der nicht Teil der Kondensatorfläche ist, zur Verbindung mit einem Massepotential wenigstens teilweise metallisiert, wobei eine oder mehrere weitere Flächen zur Durchführung eines Anschlusses oder zur Trennung der Kondensatorfläche von dem auf Massepotential zu legenden oder gelegten Teil der Außenfläche von der Metallisierung freigehalten ist oder sind. Die Metallisierung und das Anlegen von Massepotential an der restlichen Fläche des Trägers bzw. Substrates dienen der Abschirmung. Der Kontakt der metallisierten weiteren Fläche des Trägers bzw. des Substrats mit dem Grundkörper bzw. dem Gehäuse bringt diese Komponenten auf ein gemeinsames Massepotential. Wenn die Deckel vorzugsweise metallisch oder metallisch ausgekleidet sind, ist das Gehäuse insgesamt gegen Störeinflüsse von außen abgeschirmt.

In einer vorteilhaften Ausbildung ist eine Kondensatorfläche einer Kondensatorelektrode als Kragen ausgebildet, der in oder auf einem Träger oder Trägersubstrat gehaltert ist und von einem nichtleitenden Bereich des Trägers umgeben ist. In diesem Fall wird die Kondensatorfläche des Messkondensators im Wesentlichen, bis auf Zuleitungen, ausschließlich vom Kragen gebildet, wobei angrenzende Flächen des Trägers oder Trägersubstrats nicht metallisiert sind. Die elektrische Zuführung kann in Form einer oder mehrerer Speichen radial von außen ausgebildet sein oder den Träger und/oder das Substrat durchdringen. Ein solcher Kragen kann als konischer Ring ausgebildet sein und im Träger formschlüssig eingebettet sein.

Um den Betrieb in einer Zweistrangmaschine mit wenigen Zentimeter voneinander beabstandeten Materialsträngen zu ermöglichen, ist vorzugsweise vorgesehen, dass der Abstand der Mittelachse des Schutzrohres bzw. der Durchtrittsöffnung zu wenigstens einer parallel verlaufenden Seitenwand des Gehäuses weniger als 24 mm, insbesondere weniger als 20 mm, beträgt.

In einer vorteilhaften Weiterbildung ist ein erster Anschluss des Messkondensators mit einer ersten HF-Spannungsquelle verbunden, die zur Erzeugung eines HF-Spannungssignals der Frequenz f ausgebildet ist, wobei ein zweiter Anschluss des Messkondensators, insbesondere über einen Widerstand, mit einer zweiten HF-Spannungsquelle verbunden ist, die zur Erzeugung eines HF-Spannungssignals der Frequenz f ausgebildet ist, wobei die zweite HF-Spannungsquelle mit der ersten HF-Spannungsquelle bezüglich Frequenz und Phasenlage synchronisiert ist, wobei der zweite Anschluss des Messkondensators mit einem Eingang eines Verstärkers verbunden ist, wobei ein Ausgang des Verstärkers mit einem Eingang einer Regelvorrichtung verbunden ist, die ausgebildet ist, die erste HF-Spannungsquelle und/oder die zweite HF-Spannungsquelle in Amplitude und Phase des ersten HF-Spannungssignals und/oder des zweiten HF-Spannungssignals so zu steuern, dass der zweite Anschluss des Messkondensators virtuell auf Massepotential bzw. auf virtueller Masse gehalten wird. Diese erfindungsgemäße Ausbildung kann mit den zuvor beschriebenen erfindungsgemäßen Ausbildungen der HF-Strangmessvorrichtung kombiniert sein oder werden.

Die Grundidee hierbei ist, dass der zweite Anschluss des Messkondensators wiederum auf einer virtuellen Masse gehalten wird, wodurch die Einflüsse von Streukapazitäten unterdrückt werden, da diese die HF-Spannungsquellen belasten, sich jedoch nicht auf die Messkapazität auswirken. Anders als im Stand der Technik gemäß DE 10 2004 063 228 B4 und DE 10 2004 063 229 B4 wird der Verstärker oder Operationsverstärker jedoch nicht in einer Integrier- oder Differenzierschaltung betrieben, sondern in einer Beschaltung als Nulldetektor, indem sein Ausgang einer Regelvorrichtung zugeführt wird, die eine der HF-Spannungsquellen oder beide HF-Spannungsquellen derart in Amplitude und/oder Phase regelt, dass der zweite Anschluss des Messkondensators auf der virtuellen Masse gehalten wird. Die Regelparameter aus der Regelvorrichtung dienen in diesem Fall zur Bestimmung der gewünschten Messgrößen des Messkondensators und damit des Materialstrangs.

Vorzugsweise weist die Regelvorrichtung oder eine Auswertevorrichtung einen oder mehrere Analog-Digital-Wandler auf, dem oder denen zur Messung der jeweiligen HF-Spannung das erste HF-Spannungssignal und/oder das zweite HF-Spannungssignal zugeführt wird oder werden. Somit erfolgt eine weitere Bestimmung von Messgrößen direkt anhand der digitalisierten Spannungssignale, zusätzlich zu der indirekten Messung über die Regelparameter.

Vorzugsweise ist oder sind die Regelvorrichtung und/oder eine, insbesondere nachgeordnete, Auswertevorrichtung ausgebildet, aus einer momentanen Phase und einer momentanen Amplitude des ersten HF-Spannungssignals und/oder des zweiten HF-Spannungssignals eine momentane Messkapazität und/oder einen momentanen Verlustfaktor des vom Materialstrang durchsetzten Messkondensators und/oder wenigstens eine Eigenschaft des Materialstrangs zu ermitteln.

Die der Erfindung zugrunde liegende Aufgabe wird auch durch eine Maschine der Tabak verarbeitenden Industrie, insbesondere Strangmaschine zur Herstellung wenigstens eines Tabakstrangs oder Filterstrangs, mit wenigstens einer erfindungsgemäßen, vorstehend beschriebenen, kapazitiven HF-Strangmessvorrichtung gelöst.

Vorzugsweise weist die Maschine wenigstens zwei kapazitive HF-Strangmessvorrichtungen auf, wobei die HF-Strangmessvorrichtungen unmittelbar hintereinander angeordnet sind und die Durchtrittsöffnungen der HF-Strangmessvorrichtungen für den Materialstrang fluchtend zueinander ausgerichtet sind, wobei die Betriebsfrequenzen der beiden HF-Strangmessvorrichtungen voneinander abweichen, insbesondere um wenigstens einen Faktor 10, oder wobei die HF-Strangmessvorrichtungen im Wesentlichen unmittelbar nebeneinander angeordnet sind und die Durchtrittsöffnungen der HF-Strangmessvorrichtungen für zwei Materialstränge parallel zueinander ausgerichtet sind und in einer, insbesondere horizontalen, Ebene angeordnet sind, wobei insbesondere die wenigstens zwei HF-Strangmessvorrichtungen mit derselben Frequenz betrieben werden. So werden an einem Materialstrang unabhängig voneinander gleichartige Messungen bei verschiedenen HF-Frequenzen ermöglicht, oder es werden Messungen an Zweistrangmaschinen ermöglicht.

Vorteilhafterweise ist die Maschine zur Herstellung von zwei Materialsträngen ausgebildet und weist vier kapazitive HF-Strangmessvorrichtungen auf, wobei an jedem Materialstrang jeweils zwei HF-Strangmessvorrichtungen unmittelbar hintereinander angeordnet sind und die Durchtrittsöffnungen der HF-Strangmessvorrichtungen für den jeweiligen Materialstrang fluchtend zueinander ausgerichtet sind, wobei jeweils die Betriebsfrequenzen der beiden HF-Strangmessvorrichtungen an jeweils einem Materialstrang voneinander abweichen, insbesondere um wenigstens einen Faktor 10.

Die zuvor beschriebene Weiterbildung der kapazitiven HF-Strangmessvorrichtung mit zwei HF-Spannungsquellen ermöglicht ein Messverfahren zur kapazitiven Bestimmung wenigstens einer Eigenschaft eines Materialstrangs der Tabak verarbeitenden Industrie, der durch wenigstens einen Messkondensator gefördert wird, der an einem ersten Anschluss mit einem ersten HF-Spannungssignal einer Frequenz f aus einer ersten HF-Spannungsquelle beaufschlagt wird, bei welchem ein zweiter Anschluss des Messkondensators, insbesondere über einen Widerstand, mit einem zweiten HF-Spannungssignal der Frequenz f aus einer zweiten HF-Spannungsquelle beaufschlagt wird, wobei die zweite HF-Spannungsquelle mit der ersten HF-Spannungsquelle bezüglich Frequenz und Phasenlage der erzeugten HF-Spannungssignale synchronisiert sind, wobei der zweite Anschluss des Messkondensators mit einem Eingang eines Verstärkers verbunden ist, wobei ein Ausgangssignal des Verstärkers einer Regelvorrichtung zugeführt wird, mittels der die erste HF-Spannungsquelle und/oder die zweite HF-Spannungsquelle in Amplitude und Phase des ersten HF-Spannungssignals und/oder des zweiten HF-Spannungssignals so gesteuert wird, dass der zweite Anschluss des Messkondensators virtuell auf Massepotential gehalten wird.

Bei den zu messenden Eigenschaften handelt es sich insbesondere um eine Feuchte, Dichte und/oder Masse des Strangmaterials, um eine Feuchte, Dichte und/oder Masse eines Zusatzstoffes und/oder eine Masse und/oder Position von im Strang eingebetteten Elementen. Im Strang eingebettete Elemente können Fremdkörper sein, die zu einem Ausschuss von Strangabschnitten oder daraus abgelängten Materialstäben führen, oder Elemente, die dem Materialstrang im Herstellungsprozess hinzugefügt worden sind. Das Strangmaterial ist ein Tabakstrang oder ein Filterstrang.

Wie zuvor beschrieben nutzt das Messverfahren einen Verstärker, insbesondere einen Operationsverstärker, insbesondere Präzisionsverstärker, dazu, den zweiten Anschluss des Messkondensators auf eine virtuelle Masse zu legen und in der Art eines Nullkomparators oder Nulldetektors zu beschalten bzw. zu betreiben, dessen Ausgang anzeigt, ob der zweite Anschluss des Messkondensators auf dem Massepotential liegt oder nicht. Die Regelung der HF-Spannungsquelle und/oder HF-Spannungsquellen erfolgt so, dass dieser zweite Anschluss des Messkondensators auf dem Massepotential, das heißt auf virtueller Masse, gehalten wird.

Dieses Messverfahren ist im Wesentlichen unabhängig von der HF-Frequenz f zuverlässig betreibbar. Im Rahmen der Geschwindigkeit dieses Regelkreises sind Änderungen der Regelparameter auf Änderungen der dielektrischen Eigenschaften des Materialstrangs zurückzuführen, während Beiträge von Streukapazitäten herausfallen. Auf diese Weise ist es möglich, Kapazitätsänderungen des Messkondensators, der vom Materialstrang durchsetzt ist, von deutlich unterhalb einem pF zu bestimmen, bis herunter zu einem Zehntel pF oder weniger. Dies ist auch möglich bei HF-Frequenzen von 5 MHz bis 10 MHz oder darüber.

Die erste HF-Spannung und/oder die zweite HF-Spannung können mit einem oder mehreren Analog-Digital-Wandlern gemessen und/oder erfasst werden. Hierdurch wird die Messung erweitert und somit direkter und robuster.

Aus einer momentanen Phase und einer momentanen Amplitude des ersten HF-Spannungssignals und/oder des zweiten HF-Spannungssignals kann oder können eine momentane Messkapazität und/oder ein momentaner Verlustfaktor des vom Materialstrang durchsetzten Messkondensators und/oder wenigstens eine Eigenschaft des Materialstrangs ermittelt werden.

Das erste HF-Spannungssignal und/oder das zweite HF-Spannungssignal der Frequenz f ein kann oder können spektral reines sinusförmiges Signal oder spektral reine sinusförmige Signale sein. Entsprechend sind die HF-Spannungsquellen zur Erzeugung spektral reiner Signale ausgebildet.

Zur kapazitiven Bestimmung von wenigstens zwei Eigenschaften eines Materialstrangs der Tabak verarbeitenden Industrie kann der Materialstrang durch zwei erfindungsgemäße oben beschriebene kapazitive HF-Strangmessvorrichtungen gefördert werden, wobei die Frequenzen der in den beiden HF-Strangmessvorrichtungen verwendeten HF-Spannungssignale voneinander abweichen, insbesondere um wenigstens einen Faktor 10.

Zur kapazitiven Bestimmung von wenigstens jeweils einer Eigenschaft können zwei Materialstränge durch jeweils eine erfindungsgemäße, oben beschriebene kapazitive HF-Strangmessvorrichtung gefördert werden, wobei die Frequenzen der in den beiden HF-Strangmessvorrichtungen verwendeten HF-Spannungssignale im Wesentlichen gleich sind, wobei insbesondere die zu bestimmende Eigenschaft der beiden Materialstränge im Wesentlichen simultan oder gleichzeitig ermittelt werden.

Mit der erfindungsgemäßen HF-Strangmessvorrichtung und der Maschine gemäß der Erfindung ist es möglich, mit sehr hoher Präzision auch bei höheren HF-Frequenzen Eigenschaften eines mit hoher Geschwindigkeit geförderten Materialstrangs zu erfassen, wobei die zu den einzelnen Erfindungsgegenständen genannten Merkmale, Vorteile und Eigenschaften allein oder in Kombination miteinander auch für die weiteren Erfindungsgegenstände gelten. Verschiedene Merkmale, die allein bereits die der Erfindung zugrunde liegende Aufgabe lösen, sind vorteilhafterweise auch in Kombination miteinander zu bringen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Zigarettenherstellungsmaschine des Typs "PROTOS" der Anmelderin,
- Fig. 2: eine schematische Querschnittsdarstellung durch eine erfindungsgemäße kapazitive HF-Strangmessvorrichtung,
- Fig. 3: eine schematische Detaildarstellung eines Keramiksubstrats mit Kondensatorfläche,
- Fig. 4: eine schematische Darstellung eines weiteren Keramiksubstrats mit Kondensatorfläche,
- Fig. 5: eine schematische Detaildarstellung eines Keramiksubstrats mit einem Kragen als Kondensatorfläche,
- Fig. 6: eine schematische Darstellung eines weiteren Keramiksubstrats mit einem Kragen als Kondensatorfläche,
- Fig. 7: eine schematische Schaltungsanordnung einer erfindungsgemäßen HF-Strangmessvorrichtung,
- Fig. 8: eine weitere schematische Schaltungsanordnung einer erfindungsgemäßen HF-Strangmessvorrichtung und
- Fig. 9: eine weitere schematische Schaltungsanordnung einer erfindungsgemäßen HF-Strangmessvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

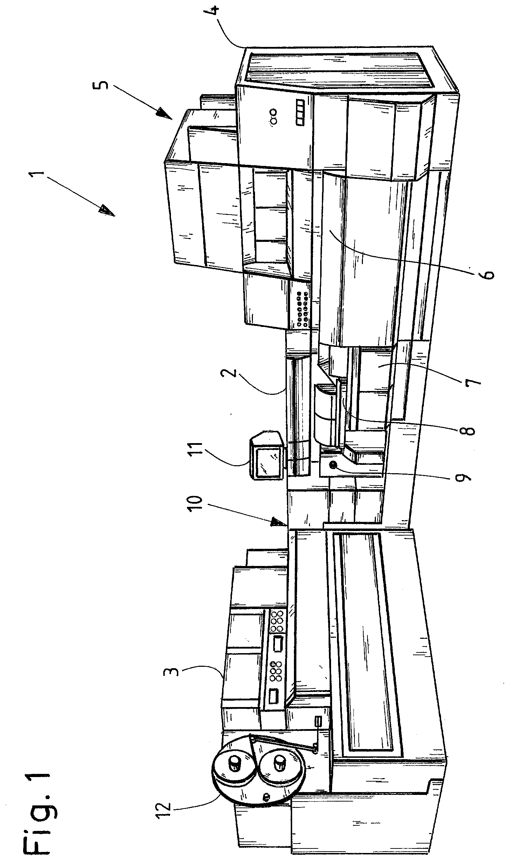

In Fig. 1 ist eine Zigarettenherstellungsmaschine des Typs "PRO-TOS" aus dem Hause der Anmelderin schematisch dargestellt, die in einer "L-förmigen" Konfiguration aus einer Zweistrangmaschine 2 und einer Filteransetzmaschine 3 zusammengesetzt ist. In Fig. 1 ist die Maschine 1 mit geschlossenen Verdeckblechen dargestellt, Einzelheiten sind der Übersichtlichkeit halber nicht dargestellt.

Im Folgenden werden einige Stationen der Zigarettenherstellung übersichtsmäßig vorgestellt. Der Herstellungsprozess zweier endloser Tabakstränge beginnt in der Zweistrangmaschine 2 in einer zweisträngigen Verteilereinheit 4 mit einem Vorverteiler 5, der unter anderem einen Steilförderer und zwei Stauschächte sowie weitere bekannte Komponenten umfasst. Darin wird loses Tabakmaterial zu einem ersten und einem parallel verlaufenden zweiten Strangförderer 6 gefördert und von unten auf die Strangförderer aufgeschauert, so dass sich zwei Tabakstränge ausbilden, die mittels Saugluft an den Strangförderern 6 gehalten werden. An den Strangförderern 6 hängend wird das Tabakmaterial in Richtung auf eine erste und eine zweite Formateinheit 8 gefördert. Dort werden die noch offenen Tabakstränge jeweils in einer Umhüllungspapiereinheit 7 mit Umhüllungspapierstreifen umwickelt, die an einer Längskante beleimt werden. Anschließend werden die Tabakstränge in den beiden Formateinheiten 8 zu zwei endlosen geschlossenen Tabaksträngen mit rundem Querschnitt geformt und die Verleimung der Umhüllungspapierstreifen verfestigt.

Nach der Formung der Tabakstränge werden diese durch eine Messvorrichtung 9 mit einer oder mehreren Messeinheiten zur Messung von Eigenschaften des jeweiligen Tabakstrangs geführt. So wird etwa das Umhüllungspapier optisch inspiziert und die Strangfeuchte und - dichte gemessen. Die Steuerung der Zweistrangmaschine 2 erfolgt von einer Steuerkonsole 11 aus.

Ausgangs der Zweistrangmaschine 2 befindet sich eine Messer- und Übergabeeinheit 10, in der die Stränge in einzelne Tabakstöcke mehrfacher Gebrauchslänge abgelängt werden, die einzelnen Tabakstöcke von einer längsaxialen in eine queraxiale Förderung umgelenkt werden und in die Filteransetzmaschine 3 überführt werden. Die Filteransetzmaschine 3 weist unter anderem auch eine Belagpapiereinheit 12 auf, von der Belagpapier abgezogen, geschnitten und beleimt wird. Nachfolgend werden die einzelnen Belagpapierblättchen in vorgesehenen Bereichen um die Tabakstöcke und Doppeltfilterstopfen gewickelt, die dadurch miteinander verbunden werden. Abschließend werden die so produzierten Doppelzigaretten mittig geschnitten und einzeln abgefördert.

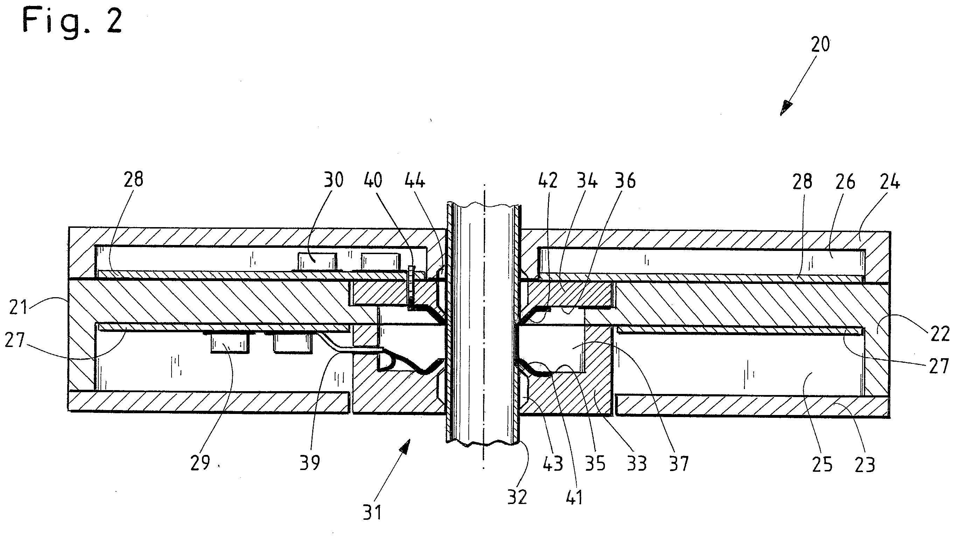

In Fig. 2 ist eine erfindungsgemäße kapazitive HF-Strangmessvorrichtung 20 schematisch im Querschnitt dargestellt. Die Strangmessvorrichtung 20 weist ein Gehäuse 21 auf, das aus mehreren Komponenten, nämlich einem Grundkörper 22, einem ersten Deckel 23 und einem zweiten Deckel 24 aufgebaut ist. Der Grundkörper 22 schließt mit dem ersten Deckel 23 eine Kammer 25 ein, in der Messelektronik angeordnet ist. Hierzu ist auf dem Grundkörper 22 eine Platine 27 angeordnet, auf der elektronische Bauteile 29, beispielsweise einer HF-Spannungsquelle, angeordnet sind. Diese elektronischen Komponenten sind in der Kammer 25 vor externen Einflüssen geschützt. Die Grundkörper 22 und die Deckel 23, 24 sind metallisch oder metallisiert ausgeführt.

Auf der gegenüberliegenden Seite schließt der zweite Deckel 24 mit dem Grundkörper 22 eine weitere Kammer 26 ein, die ebenfalls eine Platine 28 mit elektronischen Komponenten 30 aufweist, beispielsweise eine Mess- und Auswerteelektronik, ggf. auch eine Regelelektronik.

Im Zentrum des Gehäuses 21 ist ein Messkondensator 31 angeordnet, der zentral von einem Schutzrohr 32 eines Materialstrangs der Tabak verarbeitenden Industrie, beispielsweise eines Filterstrangs oder Tabakstrangs durchsetzt ist. Der Messkondensator 31 weist zwei metallisierte Träger 33, 34 auf, die jeweils eine ringförmige Kondensatorfläche 35, 36 aufweisen, zwischen denen ein ringförmiger Kondensatorspalt 37 angeordnet ist. Die Träger 33, 34 bestehen aus einem nichtleitenden Material. Bevorzugt sind dies Keramik oder Kunststoff, beispielsweise PEEK.

Die Kondensatorflächen 35, 36 sind als Metallisierungen der Träger 33, 34 ausgebildet. Durch die jeweiligen Träger 33, 34 verlaufen Anschlussleitungen 39, 40 zu den elektronischen Bauteilen 29, 30 auf den Platinen 27, 28 in den Kammern 25, 26.

Im radial nach innen weisenden Teil der ringförmigen Kondensatorflächen 35, 36 gehen die Kondensatorflächen 35, 36 in ringförmige Kragen 41, 42 über, die schräg gestellt und umlaufend ausgebildet sind. Diese Kragen 41, 42 weisen in Fig. 2 abgerundete Kanten auf, so dass die Kragen 41, 42 wie Antennen wirken und Feldlinien in den Materialstrang hinein projizieren. Dies sorgt für eine verbesserte Durchdringung des Materialstrangs mit dem HF-Feld.

Außerhalb des Messkondensators 31 bzw. des Kondensatorspalts 37 schließen sich an die Kragen 41, 42 Hinterdrehungen 43, 44 an, also ringförmige Hohlräume, die dafür sorgen, dass das elektrische Feld bzw. die elektrischen Feldlinien des HF-Feldes sich auf den Kragen 41, 42 jeweils konzentrieren. Dadurch wird eine Begrenzung des Feldes in Strangrichtung bewirkt, so dass die Ortsauflösung der Messung verbessert wird. Gleichzeitig wird durch die Projektion des HF-Felds in den Materialstrang hinein durch die Anordnung der Kragen 41, 42 die Durchdringung des Materialstrangs verbessert, wodurch die Masse, Feuchte und das Vorhandensein von Fremdkörpern auch in der Mitte des Materialstrangs verbessert wird.

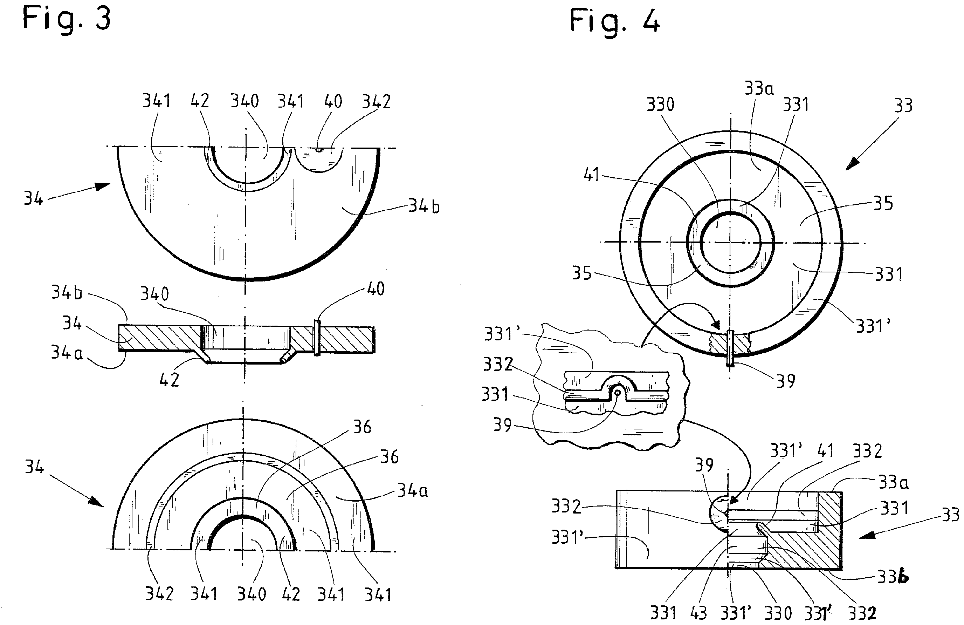

In Fig. 3 ist der im Wesentlichen kreisförmige Träger 34 mit der Kondensatorfläche 36 im Detail dargestellt. Die mittlere Darstellung zeigt einen Querschnitt durch den Träger 34, wobei an der Oberseite die Rückseite 34b und an der Unterseite die Vorderseite 34a mit der Kondensatorfläche 36 dargestellt ist. Ebenfalls ist in diesem Querschnitt der umlaufende Kragen 42 sichtbar. Zentral weist der Träger 34 eine Durchtrittsöffnung 340 für den Materialstrang auf. Ebenfalls ist in dem Querschnitt die durchgeführte Anschlussleitung 40 erkennbar.

Im oberen Teil der Fig. 3 ist eine Draufsicht auf die Rückseite 34b im Ausschnitt gezeigt. Ein Großteil der Fläche der Rückseite 34b ist als metallisierte Fläche 341 ausgebildet, wobei diese Fläche in zusammengebautem Zustand mit Masse verbunden ist. Innen schließt sich zunächst der ringförmige Kragen 42 und dann die Durchtrittsöffnung 340 an. Auch der Kragen 42 ist als metallisierte Fläche 341 ausgebildet. In der rechten Hälfte befindet sich in dem gezeigten Schnitt auch die Anschlussleitung 40, um die herum ein Bereich als nicht-metallisierte Fläche 342 ausgebildet ist, so dass die auf Masse gelegte restliche Fläche 341 nicht leitend mit der Anschlussleitung 40 verbunden ist.

Im unteren Bereich von Fig. 3 ist die Vorderseite 34a des Trägers 34 im Ausschnitt gezeigt. Von innen nach außen weist diese zunächst die Durchtrittsöffnung 340 für einen Materialstrang auf, an den sich der Kragen 42, der auch in diesem Fall als metallisierte Fläche 341 ausgebildet ist, anschließt. An den Kragen 42 schließt sich nach außen hin die Kondensatorfläche 36 an, die ebenfalls metallisiert ist. Es folgt ein nicht-metallisierter Flächenabschnitt 342, mit dem die äußerste metallisierte Fläche 341 von der Kondensatorfläche 36 getrennt ist. Somit liegen der Kragen 42 und die Kondensatorfläche 36 auf einem anderen Potential als die restliche Metallisierung des Trägers 34. Dabei handelt es sich bei der Kondensatorfläche 36 des Trägers 34 gemäß Fig. 3 vorzugsweise um die Kondensatorfläche, die auf virtueller Masse gehalten wird.

Nur der zentrale Teil des kreisförmigen Trägers 34 mit Kragen 42 und Kondensatorfläche 36 liegt auf dem Potential der virtuellen Masse. Auch der Kragen 42 gehört dabei zur Kondensatorfläche 36. Zwei ringförmige, nicht metallisierte Bereiche trennen diesen auf virtueller Masse liegenden metallisierten Bereich von dem Abschirmungsbereich, der auf einem echten Massepotential liegt.

Fig. 4 zeigt schematische Detaildarstellungen des im Wesentlichen kreisförmigen Trägers 33 aus Fig. 2. Ein Querschnitt durch den Träger 33 ist im unteren Teil von Fig. 4 gezeigt, wobei in der linken Hälfte die Außenfläche dargestellt ist und in der rechten Hälfte das Querschnittsprofil gezeigt ist. Die Außenfläche ist größtenteils als metallisierte Fläche 331', das auf einem Massepotential liegt, ausgeführt, wobei ein Bereich um die Anschlussleitung 39 herum als nicht-metallisierte Fläche 332 ausgebildet ist, so dass die Anschlussleitung 39 nicht mit der Außenmetallisierung verbunden bzw. von dieser isoliert ist.

An der Innenseite im Profil ist der Träger 33 im Wesentlichen "L"-förmig. Dabei ist die Innenseite bzw. Vorderseite 33a zuoberst dargestellt und die Rückseite 33b an der unteren Seite. In dem Querschnitt ist auch der Kragen 41 deutlich erkennbar sowie die daran sich anschließende Hinterdrehung, die in diesem Fall im Träger 33 ausgebildet ist.

Im oberen Teil von Fig. 4 ist eine Draufsicht auf die Vorderseite 33a des Trägers 33 gezeigt.

Wie sowohl der oberen als auch der unteren Ansicht in Fig. 4 zu entnehmen ist, weist der Träger 33 von innen nach außen fortschreitend zunächst eine Durchtrittsöffnung 330 für einen Materialstrang auf, an den sich zunächst der ringförmige Kragen 41 anschließt, der sowohl an seiner Vorderseite als auch an seiner Rückseite als metallisierte Fläche 331 ausgebildet ist. An den Kragen 41 schließt sich die Kondensatorfläche 35 an, die ebenfalls metallisiert ist. Auch der Kragen 41 bildet einen Teil der Kondensatorfläche 35. Zu äußerst schließt sich dann in der Draufsicht die Oberfläche des Randes an, die ebenfalls metallisiert ist. Bei der Kondensatorfläche 35 handelt es sich vorzugsweise um diejenige, die mit einem HF-Spannungssignal beaufschlagt wird.

Im Querschnitt im unteren Teil von Fig. 4 sind in Strangrichtung verschiedene Zonen zu unterscheiden. An die metallisierten Flächen 331 des Kragens 41 und der Kondensatorfläche 35 schließt sich in Richtung auf die Hinterdrehung eine Grundfläche der Hinterdrehung 43 an, die als nicht metallisierte Fläche 332 ausgebildet ist. Von hier gehen somit überhaupt keine elektrischen Feldlinien aus. Unterhalb der Hinterdrehung 43 schließt sich dann ein auf Masse liegender metallisierter Bereich 331' an, der sich auch an der Rückseite 33b fortsetzt, ebenso wie an der Außenseite.

An der Kante, an der die Kondensatorfläche 35 in eine Wand übergeht, setzt sich die metallisierte Fläche 331 ein wenig fort und endet in einer nicht-metallisierten ringförmigen Fläche 332, die in Fig. 4, untere Ansicht, nach oben hin in einen auf Masse liegenden metallisierten Teil 331' übergeht, der mit der Oberseite der Wand verbunden ist und einen Teil der Abschirmung darstellt.

Im mittleren Teil von Fig. 4 ist außerdem noch ein Detail aus dem oberen und dem unteren Teil der Fig. 4 dargestellt, nämlich eine Draufsicht auf die Innenseite der Wand an der Stelle, wo die Anschlussleitung 39 den Träger 33 durchdringt. An dieser Stelle verläuft im Wesentlichen der nicht metallisierte Bereich 332, der das Massepotential vom HF-Spannungsbereich mit den metallisierten Flächen 331 bzw. 331' trennt. Der nicht-metallisierte Bereich 332 beschreibt um die Anschlussleitung 39 einen Bogen, so dass die Anschlussleitung 39 verbunden ist mit der metallisierten Fläche 331, die mit einem HF-Spannungssignal beaufschlagt wird.

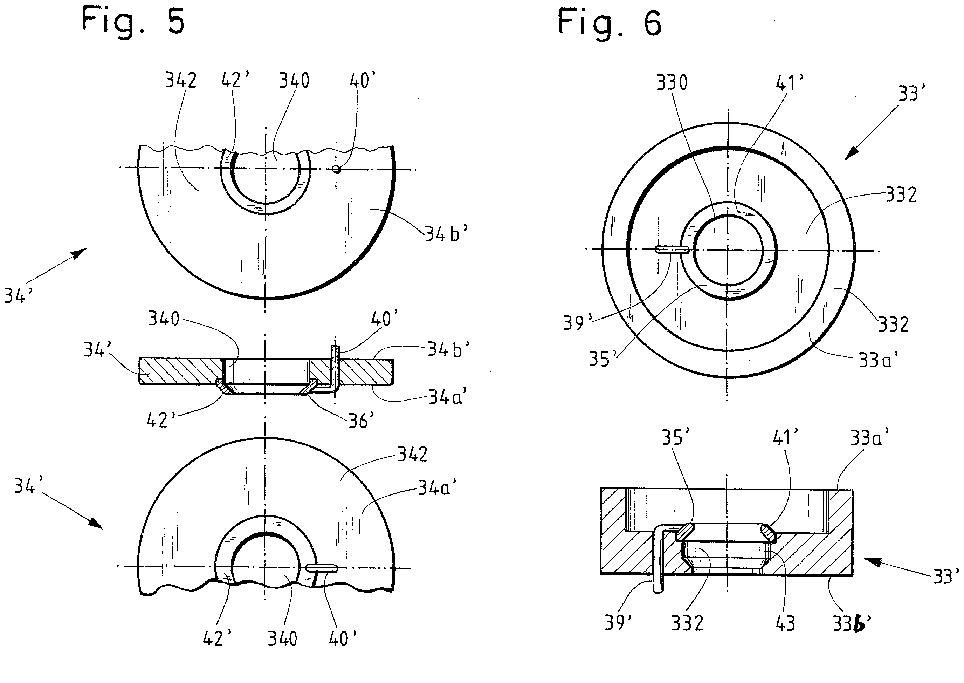

In den Figuren 5 und 6 sind alternative Ausbildungen eines Trägers 33' und eines Trägers 34' dargestellt. Im Unterschied zu den Trägern 33, 34 gemäß Figuren 3 und 4 weisen die Träger 33', 34' als Kondensatorflächen 35', 36' jeweils lediglich den jeweiligen Kragen 41', 42' auf. Die Träger 33', 34' sind nicht metallisiert. Die Kragen 41', 42' sind als konische Ringe ausgebildet, die formschlüssig im Träger 33', 34' eingebettet sind.

Der Kragen 42' des Trägers 34' in Fig. 5 ist vorzugsweise auf virtueller Masse gehalten, der Kragen 41' des Trägers 33' in Fig. 6 wird vorzugsweise mit einem HF-Spannungssignal beaufschlagt.

In Fig. 5 ist außerdem zu sehen, dass eine Anschlussleitung 40' von der Rückseite 34b' zur Vorderseite 34a' des Trägers 34' geführt wird und dort mit dem Kragen 42' verbunden ist. In gleicher Weise ist in Fig. 6 eine Anschlussleitung 39' von der Rückseite 33b' des Trägers 33' zur Vorderseite 33a' geführt und dort mit dem Kragen 41' verbunden. Der Träger 33' bildet hinter dem Kragen 41' eine Hinterdrehung 43 aus, die als nicht metallisierte Fläche 332 ausgebildet ist. Teile der Träger 33', 34' können allerdings, ähnlich wie in Fig. 3 und 4 gezeigt, metallisiert sein, um durch Anlegen eines Massepotentials eine Abschirmung zu erzeugen.

Die in den Figuren 5 und 6 gezeigte Variante konzentriert das HF-Feld des Messkondensators wesentlich im Bereich des durch den Messkondensator geführten Materialstrangs.

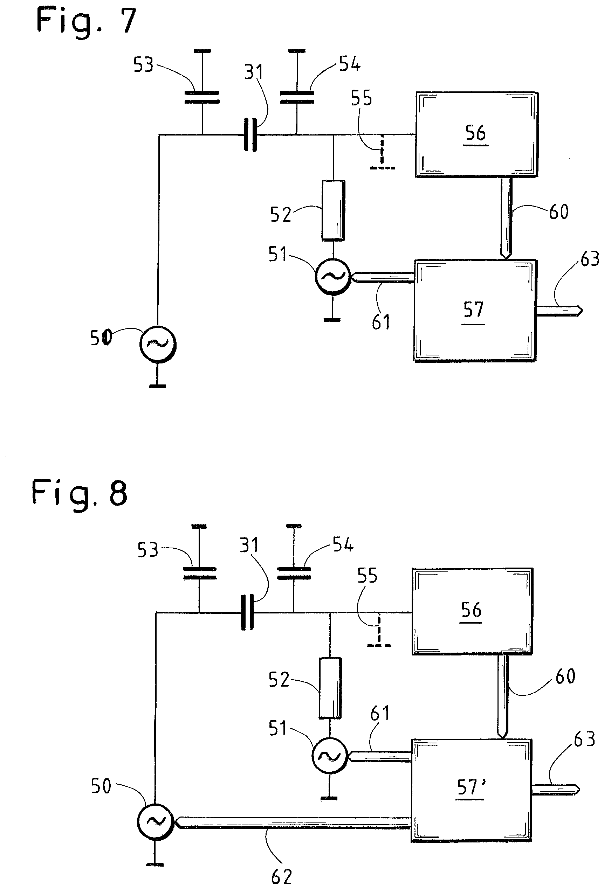

In den Figuren 7 bis 9 sind erfindungsgemäße Schaltanordnungen für eine kapazitive HF-Strangmessvorrichtung, insbesondere gemäß Fig. 2 bis 4, dargestellt, die sich in wesentlichen Punkten gleichen.

In Fig. 7 ist ein erstes Prinzip der Schaltungsanordnung gezeigt. Der Messkondensator 31 ist an einem ersten Anschluss mit der ersten HF-Spannungsquelle 50 verbunden. Eine Streukapazität 53 ergibt sich bei dieser Leitung gegenüber der Masse. Der zweite Anschluss des Messkondensators 31, an dem ebenfalls über die entsprechenden Leitungen eine Streukapazität 54 zur Masse hin besteht, ist einerseits über einen Präzisionswiderstand 52 mit einer zweiten HF-Spannungsquelle 51 verbunden und andererseits mit einem Präzisionsverstärker 56 bzw. Präzisionsoperationsverstärker. Der zweite Anschluss des Messkondensators 31 ist mit einem Eingang des Präzisionsverstärkers 56 verbunden, so dass der Ausgang des Verstärkers 56 dann ein verschwindendes Signal ausgibt, wenn das Potential am zweiten Anschluss des Messkondensators 31 auf dem gleichen Potential wie das Massepotential liegt.

Über ein Eingangssignal 60, das aus dem Ausgang Verstärkers 56 in eine Regelvorrichtung 57 eingeführt wird, bestimmt die Regelvorrichtung 57 Regelparameter für die HF-Spannungsquelle 51, die auf diese Weise so gesteuert wird, dass das HF-Signal, das aus dem zweiten Anschluss des Messkondensators 31 hinaustritt, kompensiert wird und somit dieser zweite Anschluss des Messkondensators 31 auf einer virtuellen Masse 55 verbleibt.

Die ersten und zweiten HF-Spannungsquellen 50 und 51 sind synchronisiert und generieren beide ein HF-Signal der gleichen Frequenz f, beispielsweise zwischen 5 MHz und 10 MHz, und gleicher Phasenlage.

Die Anwesenheit des Materialstrangs im Messkondensator 31 führt dazu, dass sich die Messkapazität aufgrund der Dielektrizität des Strangmaterials ändert, insbesondere wenn sich die Masse und/oder Feuchte des Strangmaterials ändert. Eine solche Änderung führt dazu, dass sich das HF-Signal, das durch den Messkondensator 31 hindurchtritt, in Betrag und Phase ändert, so dass es von Betrag und Phase des von der zweiten HF-Signalquelle 51 generierten Signal unterscheidet und das Massepotential verlassen wird. Die Regelschleife regelt Amplitude und Phase der zweiten HF-Spannungsquelle so nach, dass das aus dem Messkondensator 31 heraustretende Signal wiederum kompensiert wird und auf diese Weise kontinuierlich die virtuelle Masse 55 aufrechterhalten wird. Die dabei angepassten Regelparameter werden verwendet, um die gewünschten Messdaten zu ermitteln und in einer Messdatenausgabe 63 auszugeben.

Die Schaltungsanordnung gemäß Fig. 8 entspricht im Wesentlichen der aus Fig. 7, wobei gemäß Fig. 8 zusätzlich zu einer Regelung der Phase und/oder Amplitude des HF-Signals aus der zweiten HF-Spannungsquelle 51 auch noch Phase und/oder Amplitude des HF-Spannungssignals aus der ersten HF-Spannungsquelle 50 geregelt wird. Die Regelvorrichtung 57' ist dazu mit beiden HF-Spannungsquellen 50, 51 verbunden. In einer beispielhaften Ausführungsform wird dann beispielsweise in der HF-Spannungsquelle 50 nur die Phase und in der HF-Spannungsquelle 51 nur die Amplitude geändert. Auch andere Auswahlen von Regelparametern sind hierbei denkbar. Es kann auch ausschließlich eine Regelung der ersten HF-Spannungsquelle 50 erfolgen.

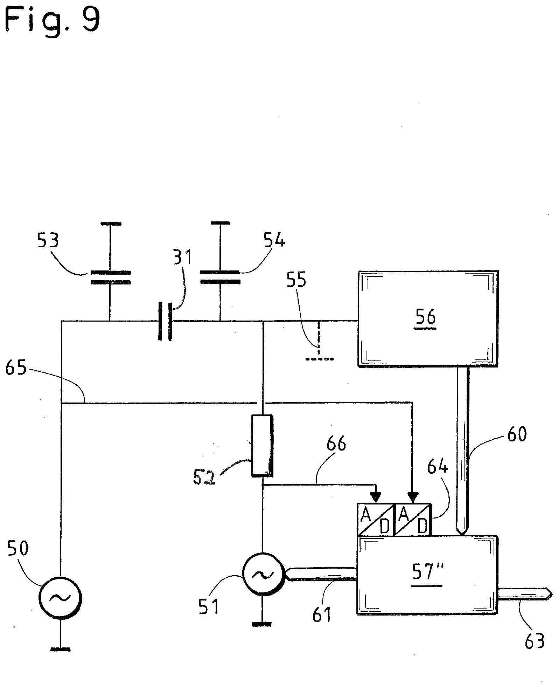

In Fig. 9 ist eine weitere Alternative einer Schaltungsanordnung gemäß der Erfindung dargestellt, die sich von der aus Fig. 7 darin unterscheidet, dass die Regelvorrichtung 57' noch eine Analog-DigitalWandlereinheit 64 aufweist, die mit Spannungssignalen 65, 66 von den HF-Spannungsquellen 50, 51 versorgt wird. Die Analog-Digital-Wandler messen in diesem Fall direkt das jeweilige HF-Signal aus den Generatoren, so dass sich eine zusätzliche direkte Messung ergibt, die die Messung weiter beschleunigt und verbessert. Auch in diesem Fall kann, analog zu Fig. 8, eine Regelung der ersten HF-Spannungsquelle 50 zusätzlich oder alternativ erfolgen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Maschine
- 2: Zweistrangmaschine
- 3: Filteransetzmaschine
- 4: Verteilereinheit
- 5: Vorverteiler
- 6: Strangförderer
- 7: Umhüllungspapiereinheit
- 8: Formateinheit
- 9: Messvorrichtung
- 10: Messer- und Übergabeeinheit
- 11: Steuerkonsole
- 12: Belagpapiereinheit
- 20: kapazitive HF-Strangmessvorrichtung
- 21: Gehäuse
- 22: Grundkörper
- 23: erster Deckel
- 24: zweiter Deckel
- 25, 26: Kammer
- 27, 28: Platine
- 29, 30: elektronische Bauteile
- 31: Messkondensator
- 32: Schutzrohr
- 33, 33': Träger
- 33a, 33a': Vorderseite
- 33b, 33b': Rückseite
- 34, 34': Träger
- 34a, 34a': Vorderseite
- 34b, 34b': Rückseite
- 35, 35': Kondensatorfläche
- 36, 36': Kondensatorfläche
- 37: Kondensatorspalt
- 39, 39': Anschlussleitung
- 40, 40': Anschlussleitung
- 41, 41': Kragen
- 42, 42': Kragen
- 43, 44: Hinterdrehung
- 50: erste HF-Spannungsquelle
- 51: zweite HF-Spannungsquelle
- 52: Präzisionswiderstand
- 53, 54: Streukapazität
- 55: virtuelle Masse
- 56: Präzisionsverstärker
- 57, 57', 57": Regelvorrichtung
- 60: Eingangssignal
- 61: Steuerleitung
- 62: Steuerleitung
- 63: Messdatenausgabe
- 64: Analog-Digitalwandlereinheit
- 65: Spannungssignal
- 66: Spannungssignal
- 330: Durchtrittsöffnung
- 331: metallisierte Fläche
- 331': metallisierte Fläche auf Massepotential
- 332: nicht metallisierte Fläche
- 340: Durchtrittsöffnung
- 341: metallisierte Fläche
- 342: nicht metallisierte Fläche

## Patentansprüche

1. Kapazitive HF-Strangmessvorrichtung (20), insbesondere zur kapazitiven Bestimmung wenigstens einer Eigenschaft eines Materialstrangs oder mehrerer Materialstränge der Tabak verarbeitenden Industrie, umfassend ein Gehäuse (21) mit wenigstens einem Messkondensator (31), der durch einen Materialstrang durchsetzbar ist und der mit einem HF-Spannungssignal beaufschlagbar ist, **dadurch gekennzeichnet, dass** der Messkondensator (31) zwei einander gegenüberliegende, insbesondere kreisringförmige, Kondensatorflächen (35, 35', 36, 36') aufweist, die jeweils zentrale Durchtrittsöffnungen (330, 340) für einen Materialstrang aufweisen, wobei wenigstens eine der beiden Kondensatorflächen (35, 35', 36, 36') in einem ringförmigen Bereich um die Durchtrittsöffnung (330, 340) herum in einen umlaufenden und radial nach innen überstehenden Kragen (41, 42) mündet oder als ein in einem ringförmigen Bereich um die Durchtrittsöffnung (330, 340) herum umlaufender und radial nach innen überstehender Kragen (41', 42') ausgebildet ist, dessen innere Öffnung eine Durchtrittsöffnung (330, 340) für den Materialstrang bildet und der eine von dem Zwischenraum (37) zwischen den Kondensatorflächen (35, 35', 36, 36') abgewandte Rückseite aufweist, an der sich der Innendurchmesser des Gehäuses (21) gegenüber dem Durchmesser der Durchtrittsöffnung (330, 340) unter Bildung einer ringförmigen Hinterdrehung (43, 44) öffnet.

2. Kapazitive HF-Strangmessvorrichtung (20) nach Anspruch 1, **dadurch gekennzeichnet, dass** eine oder mehrere genauigkeitsbestimmende elektronische Komponenten (29, 30) im Gehäuse (21) angeordnet sind, wobei das Gehäuse (21) eine oder mehrere Kammern (25, 26) aufweist, in denen jeweils eine oder mehrere genauigkeitsbestimmende elektronische Messkomponenten (29, 30) angeordnet sind, insbesondere einer oder mehrere HF-Spannungsquellen, Auswertungsschaltungen und/oder Regelungsschaltungen, wobei das Gehäuse (21) einen Grundkörper (22) und einen oder mehrere Deckel (23, 24) umfasst, die zu dem Gehäuse (21) zusammensetzbar sind, wobei insbesondere die Kammer (25, 26) oder die Kammern (25, 26) als Aussparungen im Grundkörper (22) und/oder in dem Deckel (23, 24) oder den Deckeln (23, 24) ausgebildet sind.

3. Kapazitive HF-Strangmessvorrichtung (20) nach Anspruch 1 oder 2, **dadurch gekennzeichnet, dass** die Hinterdrehung (43, 44) oder Hinterdrehungen (43, 44) in axialer Richtung durch einen oder mehrere radial nach innen überstehende Gehäuseabschnitte abgeschlossen wird oder werden.

4. Kapazitive HF-Strangmessvorrichtung (20) nach einem der Ansprüche 1 bis 3, **dadurch gekennzeichnet, dass** der Kragen (41, 41', 42, 42') eine im Querschnitt gerade oder gebogene ringförmig um die Durchtrittsöffnung (330, 340) herum laufende Fläche mit einer, insbesondere abgerundeten Endkante, bildet, wobei insbesondere der Kragen (41, 41', 42, 42') die Kondensatorfläche (35, 36) oder eine Endfläche (33a', 34a') verlängert oder einen Winkel mit der Kondensatorfläche (35, 36) oder Endfläche (33a', 34a') von mehr als 90°, insbesondere bis zu 225°, insbesondere zwischen 120° und 150°, einschließt.

5. Kapazitive HF-Strangmessvorrichtung (20) nach einem der Ansprüche 1 bis 4, **dadurch gekennzeichnet, dass** wenigstens eine Kondensatorelektrode einen Träger (33, 33', 34, 34') oder ein Trägersubstrat aus nichtleitendem Material aufweist, insbesondere aus Kunststoff oder Keramiksubstrat, insbesondere aus PEEK oder PBI, dessen Kondensatorfläche metallisiert ist, insbesondere mit einer aufgedampften Metallschicht, einer geklebten folienartigen Beschichtung oder einem kreisförmigen, formschlüssig eingebetteten Metallring.

6. Kapazitive HF-Strangmessvorrichtung (20) nach Anspruch 5, **dadurch gekennzeichnet, dass** ein Anschluss (39, 34', 40, 40') einer Kondensatorfläche (35, 35', 36, 36') durch den Träger (33, 33', 34, 34') oder das Trägersubstrat geführt ist.

7. Kapazitive HF-Strangmessvorrichtung (20) nach Anspruch 5 oder 6, **dadurch gekennzeichnet, dass** ein Teil der Außenfläche (331, 331', 341) des Trägers (33, 33', 34, 34') oder des Trägersubstrats, der nicht Teil der Kondensatorfläche ist, zur Verbindung mit einem Massepotential wenigstens teilweise metallisiert ist, wobei eine oder mehrere weitere Flächen (332, 342) zur Durchführung eines Anschlusses (39, 39', 40, 40') oder zur Trennung der Kondensatorfläche (35, 35', 36, 36') von dem auf Massepotential zu legenden oder gelegten Teil der Außenfläche (331, 331', 341) von der Metallisierung freigehalten ist oder sind.

8. Kapazitive HF-Strangmessvorrichtung (20) nach einem der Ansprüche 5 bis 7, **dadurch gekennzeichnet, dass** eine Kondensatorfläche (35', 36') einer Kondensatorelektrode als Kragen (41', 42') ausgebildet ist, der in oder auf einem Träger (33', 34') oder Trägersubstrat gehaltert ist und von einem nichtleitenden Bereich des Trägers (33', 34') umgeben ist.

9. Kapazitive HF-Strangmessvorrichtung (20) nach einem der Ansprüche 1 bis 8, **dadurch gekennzeichnet, dass** ein erster Anschluss des Messkondensators (31) mit einer ersten HF-Spannungsquelle (50) verbunden ist, die zur Erzeugung eines HF-Spannungssignals der Frequenz f ausgebildet ist, wobei ein zweiter Anschluss des Messkondensators (31), insbesondere über einen Widerstand (52), mit einer zweiten HF-Spannungsquelle (51) verbunden ist, die zur Erzeugung eines HF-Spannungssignals der Frequenz f ausgebildet ist, wobei die zweite HF-Spannungsquelle (51) mit der ersten HF-Spannungsquelle (50) bezüglich Frequenz und Phasenlage synchronisiert ist, wobei der zweite Anschluss des Messkondensators (31) mit einem Eingang eines Verstärkers (56) verbunden ist, wobei ein Ausgang des Verstärkers (56) mit einem Eingang einer Regelvorrichtung (57, 57', 57") verbunden ist, die ausgebildet ist, die erste HF-Spannungsquelle (50) und/oder die zweite HF-Spannungsquelle (51) in Amplitude und Phase des ersten HF-Spannungssignals und/oder des zweiten HF-Spannungssignals so zu steuern, dass der zweite Anschluss des Messkondensators (31) virtuell auf Massepotential (55) gehalten wird.

10. Kapazitive HF-Strangmessvorrichtung (20) nach Anspruch 9, **dadurch gekennzeichnet, dass** die Regelvorrichtung (57") oder eine Auswertevorrichtung einen oder mehrere Analog-Digital-Wandler (64) aufweist, dem oder denen zur Messung der jeweiligen HF-Spannung das erste HF-Spannungssignal und/oder das zweite HF-Spannungssignal zugeführt wird oder werden, wobei die Regelvorrichtung (57, 57', 57") und/oder eine, insbesondere nachgeordnete, Auswertevorrichtung ausgebildet ist oder sind, aus einer momentanen Phase und einer momentanen Amplitude des ersten HF-Spannungssignals und/oder des zweiten HF-Spannungssignals eine momentane Messkapazität und/oder einen momentanen Verlustfaktor des vom Materialstrang durchsetzten Messkondensators (31) und/oder wenigstens eine Eigenschaft des Materialstrangs zu ermitteln.

11. Maschine (1) der Tabak verarbeitenden Industrie, insbesondere Strangmaschine zur Herstellung wenigstens eines Tabakstrangs oder Filterstrangs, mit wenigstens einer kapazitiven HF-Strangmessvorrichtung (20) nach einem der Ansprüche 1 bis 10.

12. Maschine (1) nach Anspruch 11, **dadurch gekennzeichnet, dass** die Maschine (1) wenigstens zwei kapazitive HF-Strangmessvorrichtungen (20) aufweist, wobei die HF-Strangmessvorrichtungen (20) unmittelbar hintereinander angeordnet sind und die Durchtrittsöffnungen (330, 340) der HF-Strangmessvorrichtungen (20) für den Materialstrang fluchtend zueinander ausgerichtet sind, wobei die Betriebsfrequenzen der beiden HF-Strangmessvorrichtungen (20) voneinander abweichen, insbesondere um wenigstens einen Faktor 10, oder wobei die HF-Strangmessvorrichtungen (20) im Wesentlichen unmittelbar nebeneinander angeordnet sind und die Durchtrittsöffnungen (330, 340) der HF-Strangmessvorrichtungen (20) für zwei Materialstränge parallel zueinander ausgerichtet sind und in einer, insbesondere horizontalen, Ebene angeordnet sind, wobei insbesondere die wenigstens zwei HF-Strangmessvorrichtungen (20) mit derselben Frequenz betrieben werden.

13. Maschine (1) nach Anspruch 11 oder 12, **dadurch gekennzeichnet, dass** die Maschine (1) zur Herstellung von zwei Materialsträngen ausgebildet ist und vier kapazitive HF-Strangmessvorrichtungen (20) aufweist, wobei an jedem Materialstrang jeweils zwei HF-Strangmessvorrichtungen (20) unmittelbar hintereinander angeordnet sind und die Durchtrittsöffnungen (330, 340') der HF-Strangmessvorrichtungen (20) für den jeweiligen Materialstrang fluchtend zueinander ausgerichtet sind, wobei jeweils die Betriebsfrequenzen der beiden HF-Strangmessvorrichtungen (20) an jeweils einem Materialstrang voneinander abweichen, insbesondere um wenigstens einen Faktor 10.

## Claims

1. Capacitive HF rod measurement device (20) in particular for the capacitive determination of at least one property of a material rod or several material rods of the tobacco-processing industry, including a housing (21) with at least one measuring capacitor (31), through which a material rod can pass through, and upon which an HF voltage signal can act, **characterised in that** the measuring capacitor (31) has two opposite, in particular circular, capacitor surfaces (35, 35', 36, 36'), which in each case have central passage openings (330, 340) for a material rod, with at least one of the two capacitor surfaces (35, 35', 36, 36') opening in an annular area around the passage opening (330, 340) in a collar projecting radially inward (41, 42) or being made as a collar going around the passage opening (330, 340) in a radial area and projecting radially inward (41', 42), the inner opening of which collar forms a passage opening (330, 340) for the material rod and which has a back side turned away from the intermediate space (37) between the capacitor surfaces (35, 35', 36, 36'), at which the inner diameter of the housing (21) opens with respect to the diameter of the passage opening (330, 340) with formation of an annular recess (43, 44).

2. Capacitive HF rod measuring device (20) according to Claim 1, **characterised in that** one or more accuracy-determining electronic components (29, 30) are located in the housing (21), with the housing (21) having one or more chambers (25, 26), in which in each case one or more accuracy-determining electronic measuring components (29, 30) are located, in particular one or more HF voltage sources, evaluation circuits, and/or control circuits, with the housing (21) including a main part (22) and one or more covers (23, 24), which can be combined with the housing (21), in particular with the chamber (25, 26) or the chambers (25, 26) being made as recesses in the main part (22) and/or in the cover (23, 24) or the covers (23, 24).

3. Capacitive HF rod measurement device (20) according to Claim 1 or Claim 2, **characterised in that** the recess (43, 44) or recesses (43, 44) is or are closed in the axial direction by one or more housing sections projecting radially inward.

4. Capacitive HF rod measurement device (20) according to one of Claims 1 to 3, **characterised in that** the collar (41, 41', 42, 42') forms a cross-sectionally straight or bent surface passing annularly around the passage opening (330, 340), in particular with a rounded end edge, in particular with the collar (41, 41', 42, 42') including the capacitor surface (35, 36) or an end surface (33a', 34a') being elongated or including an angle with the capacitor surface (35, 36) or end surface (33a', 34a') of more than 90°, in particular up to 225°, in particular between 120° and 150°.

5. Capacitive HF rod measurement device (20) according to one of Claims 1 to 4, **characterised in that** at least one capacitor electrode has a carrier (33, 33', 34, 34') or a carrier substrate made out of a non-conducting material, in particular out of plastic or ceramic substrate, in particular out of PEEK or PBI, the capacitor surface of which is metallised, in particular with a vapor-deposited metal layer, a glued film-like coating, or a circular, positively locking embedded metal ring.

6. Capacitive HF rod measurement device (20) according to Claim 5, **characterised in that** one connection (39, 34', 40, 40') of a capacitor surface (35, 35', 36, 36') is guided through the carrier (33, 33', 34, 34') or the carrier substrate.

7. Capacitive HF rod measurement device (20) according to Claim 5 or Claim 6, **characterised in that** a part of the exterior (331, 331', 341) of the carrier (33, 33', 34, 34') or the carrier substrate, which is not a part of the capacitor surface, is at least partially metallised for connection with a ground potential, with one or more additional surfaces (332, 342) kept free from metallisation for making a connection (39, 39', 40, 40') or for disconnecting the capacitor surface (35, 35', 36, 36') from the part of the outer surface (331, 331', 341) to be put or put at ground potential.

8. Capacitive HF rod measurement device (20) according to one of Claims 5 to 7, **characterised in that** a capacitor surface (35', 36') of a capacitor electrode is made as a collar (41', 42'), which is held in or on a carrier (33', 34') or carrier substrate and is surrounded by a non-conducting area of the carrier (33', 34').

9. Capacitive HF rod measurement device (20) according to one of Claims 1 to 8, **characterised in that** a first terminal of the measuring capacitor (31) is connected with a first HF voltage source (50), which is made for generating a HF voltage signal of the frequency f, with a second terminal of the measuring capacitor (31) being connected with a second HF voltage source (52), which is made for creating a HF voltage signal of the frequency f, in particular via a resistor (51), the second HF voltage source (51) being synchronized with the first HF voltage source (50) with respect to frequency and phasing, with the second terminal of the measuring capacitor (31) being connected with an input of an amplifier (56), with an output of the amplifier (56) being connected with an input of a control device (57, 57', 57"), which is designed to control the first HF voltage source (50) and/or the second HF voltage source (51) in amplitude and phase of the first HF voltage signal and/or the second HF-voltage signal so that the second connection of the measuring capacitor (31) is held virtually at ground potential (55).

10. Capacitive HF rod measurement device (20) according to Claim 9, **characterised in that** the control device (57") or an evaluation device has one or more analog-to-digital converters (64), to which the first HF voltage signal and/or the second HF voltage signal is or are supplied for measuring the respective HF voltage, the control device (57, 57', 57") and/or an, in particular subsequently connected, evaluation device being provided in order to determine an instantaneous measuring capacity and/or an instantaneous loss factor of the measuring capacitor (31) through which the material rod passes, and/or at least one property of the material rod, from an instantaneous phase and an instantaneous amplitude of the first HF voltage signal and/or the second HF voltage signal.

11. Machine (1) of the tobacco-processing industry, in particular a rod machine for producing at least one tobacco rod or filter rod, with at least one capacitive HF rod measurement device (20) according to one of Claims 1 to 10.

12. Machine (1) according to Claim 11, **characterised in that** the machine (1) has at least two capacitive HF rod measuring devices (20), with the HF rod measuring devices (20) arranged immediately one after the other and the passage openings (330, 340) of the HF rod measuring devices (20) for the material rod being aligned with one another, with the operating frequencies of the two HF rod measuring devices (20) deviating from one another, in particular by at least a factor of 10, or with the HF rod measuring devices (20) being arranged essentially immediately beside one another and the passage openings (330, 340) of the HF rod measuring devices (20) for two material rods being aligned parallel to one another and arranged in an, in particular horizontal, plane, in particular with the at least two HF rod measuring devices (20) being operated with the same frequency.

13. Machine (1) according to Claim 11 or 12, **characterised in that** the machine (1) is designed for producing two material rods and has four capacitive HF rod measuring devices (20), on each material rod in each case two HF rod measuring devices (20) are arranged immediately after one another and the passage openings (330, 340') of the HF rod devices (20) for the respective material rod aligned with one another, in each case the operating frequencies of the two HF rod measuring devices (20) on in each case one material rod deviate from one another, in particular by at least a factor of 10.

## Revendications

1. Dispositif HF de mesure capacitive de boudin (20), notamment pour déterminer de façon capacitive au moins une caractéristique d'un boudin de matériau ou de plusieurs boudins de matériau de l'industrie de traitement du tabac, comprenant un boîtier (21) avec au moins un condensateur de mesure (31) par lequel un boudin de matériau peut passer et auquel un signal HF peut être appliqué, **caractérisé en ce que** le condensateur de mesure (31) comprend deux surfaces de condensateur (35, 35', 36, 36') en regard et ayant notamment la forme d'un anneau circulaire, qui comprennent chacune une ouverture de passage centrale (330, 340) pour un boudin de matériau, au moins une des deux surfaces de condensateur (35, 35', 36, 36') débouchant, dans une zone annulaire autour de l'ouverture de passage (330, 340), dans un collet (41, 42) périphérique et radialement en dépassement vers l'intérieur ou étant configuré, dans une zone annulaire autour de l'ouverture de passage (330, 340), comme un collet (41', 42') périphérique et radialement en dépassement vers l'intérieur dont l'ouverture intérieure forme une ouverture de passage (330, 340) pour le boudin de matériau et qui comprend une face arrière détournée de l'espace (37) entre les surfaces de condensateur (35, 35', 36, 36'), sur laquelle le diamètre intérieur du boîtier (21) s'ouvre par rapport au diamètre de l'ouverture de passage (330, 340) en formant une dépouille (43, 44) annulaire.

2. Dispositif HF de mesure capacitive de boudin (20) selon la revendication 1, **caractérisé en ce qu'**une ou plusieurs composantes électroniques (29, 30) déterminant une précision sont disposées dans le boîtier (21), le boîtier (21) comprenant une ou plusieurs chambres (25, 26) dans chacune desquelles sont disposées une ou plusieurs composantes électroniques de mesure (29, 30) déterminant une précision, en particulier une ou plusieurs sources de tension HF, des circuits d'exploitation et/ou des circuits de régulation, le boîtier (21) comprenant un corps de base (22) et un ou plusieurs couvercles (23, 24) qui peuvent être assemblés pour former le boîtier (21), en particulier la chambre (25, 26) ou les chambres (25, 26) étant formées comme évidements dans le corps de base (22) et/ou dans le couvercle (23, 24) ou les couvercles (23, 24).

3. Dispositif HF de mesure capacitive de boudin (20) selon la revendication 1 ou 2, **caractérisé en ce que** la dépouille (43, 44) ou les dépouilles (43, 44) est ou sont terminée(s) dans la direction axiale par un ou plusieurs sections de boîtier radialement en dépassement vers l'intérieur.

4. Dispositif HF de mesure capacitive de boudin (20) selon l'une des revendications 1 à 3, **caractérisé en ce que** le collet (41, 41', 42, 42') forme une surface plane ou recourbée s'étendant de façon annulaire autour de l'ouverture de passage (330, 340) et présentant en particulier un bord d'extrémité arrondi, en particulier le collet (41, 41', 42, 42') prolongeant la surface de condensateur (35, 36) ou une surface d'extrémité (33a', 34a') ou enfermant avec la surface de condensateur (35, 36) ou la surface d'extrémité (33a', 34a') un angle de plus de 90°, en particulier jusqu'à 225°, en particulier entre 120° et 150°.

5. Dispositif HF de mesure capacitive de boudin (20) selon l'une des revendications 1 à 4, **caractérisé en ce qu'**au moins une électrode de condensateur comprend un support (33, 33', 34, 34') ou un substrat de support en un matériau non conducteur, en particulier en matière synthétique ou un substrat céramique, en particulier en PEEK ou PBI, dont la surface de condensateur est métallisée, en particulier avec une couche métallique appliquée sous vide, un recouvrement sous la forme d'un film collé là-dessus ou avec un anneau métallique de forme circulaire incorporé en complémentarité de forme.

6. Dispositif HF de mesure capacitive de boudin (20) selon la revendication 5, **caractérisé en ce qu'**un raccord (39, 39', 40, 40') d'une surface de condensateur (35, 35', 36, 36') est passé par le support (33, 33', 34, 34') ou le substrat de support.

7. Dispositif HF de mesure capacitive de boudin (20) selon la revendication 5 ou 6, **caractérisé en ce qu'**une partie de la surface extérieure (331, 331', 341) du support (33, 33', 34, 34') ou du substrat de support, qui ne fait pas partie de la surface de condensateur, est au moins partiellement métallisée pour un raccordement à un potentiel de masse, une ou plusieurs autres surfaces (332, 342) étant exemptée(s) de la métallisation pour le passage d'un raccord (39, 39', 40, 40') ou pour la séparation de la surface de condensateur (35, 35', 36, 36') de la partie de la surface extérieure (331, 331', 341) qui doit être mise ou qui est mise au potentiel de masse.

8. Dispositif HF de mesure capacitive de boudin (20) selon l'une des revendications 5 à 7, **caractérisé en ce qu'**une surface de condensateur (35', 36') d'une électrode de condensateur est formée comme collet (41', 42') qui est fixé dans ou sur un support (33', 34') ou un substrat de support et qui est entouré d'une zone non conductrice du support (33', 34').

9. Dispositif HF de mesure capacitive de boudin (20) selon l'une des revendications 1 à 8, **caractérisé en ce qu'**un premier raccord du condensateur de mesure (31) est raccordé à une première source de tension HF (50) qui est configurée pour engendrer un signal de tension HF de fréquence f, un deuxième raccord du condensateur de mesure (31) étant raccordé, notamment par une résistance (52), à une deuxième source de tension HF (51) qui est configurée pour engendrer un signal de tension HF de fréquence f, la deuxième source de tension HF (51) étant synchronisée avec la première source de tension HF (50) en ce qui concerne la fréquence et la relation de phase, le deuxième raccord du condensateur de mesure (31) étant relié à une entrée d'un amplificateur (56), une sortie de l'amplificateur (56) étant raccordée à une entrée d'un dispositif de régulation (57, 57', 57") qui est conformé pour commander la première source de tension HF (50) et/ou la deuxième source de tension HF (51) en ce qui concerne l'amplitude et la phase du premier signal de tension HF et/ou du deuxième signal de tension HF de façon telle que le deuxième raccord du condensateur de mesure (31) soit maintenu virtuellement sur le potentiel de masse (55).

10. Dispositif HF de mesure capacitive de boudin (20) selon la revendication 9, **caractérisé en ce que** le dispositif de régulation (57") ou un dispositif d'exploitation comprend un ou plusieurs convertisseurs analogue-digital (64) au(x)quel(s) le premier signal de tension HF et/ou le deuxième signal de tension HF est ou sont acheminé(s) pour mesurer la tension HF respective, le dispositif de régulation (57, 57', 57") et/ou un dispositif d'exploitation, en particulier disposé(s) en aval, étant configuré(s) pour déterminer, à partir d'une phase momentanée et d'une amplitude momentanée du premier signal de tension HF et/ou du deuxième signal de tension HF, une capacité de mesure momentanée et/ou un coefficient de pertes momentané du condensateur de mesure (31) traversé par le boudin de matériau et/ou au moins une caractéristique du boudin de matériau.

11. Machine (1) de l'industrie de traitement du tabac, en particulier machine de boudin pour la fabrication d'au moins un boudin de matériau ou d'un boudin de filtre avec un dispositif HF de mesure capacitive de boudin (20) selon l'une des revendications 1 à 10.

12. Machine (1) selon la revendication 11, **caractérisée en ce que** la machine (1) comprend au moins deux dispositifs HF de mesure capacitive de boudin (20), les dispositifs HF de mesure de boudin (20) étant disposés directement les uns après les autres, et **en ce que** les ouvertures de passage (330, 340) des dispositifs HF de mesure de boudin (20) sont agencées de façon alignées les unes par rapport aux autres pour le boudin de matériau, les fréquences de fonctionnement des deux dispositifs HF de mesure de boudin (20) étant différentes l'une de l'autre, en particulier au moins d'un facteur de 10, ou les dispositifs HF de mesure de boudin (20) étant disposés sensiblement directement l'un à côté de l'autre et les ouvertures de passage (330, 340) des dispositifs HF de mesure de boudin (20) étant orientées parallèlement l'une à l'autre et étant disposées dans un plan notamment horizontal, pour deux boudins de matériau, lesdits au moins deux dispositifs HF de mesure de boudin (20) étant faits fonctionner à la même fréquence.

13. Machine (1) selon la revendication 11 ou 12, **caractérisée en ce que** la machine (1) est configurée pour la fabrication de deux boudins de matériau et comprend quatre dispositifs HF de mesure capacitive de boudin (20), à chaque boudin de matériau, deux dispositifs HF de mesure capacitive de boudin (20) étant disposés directement l'un après l'autre et les ouvertures de passage (330, 340') des dispositifs HF de mesure de boudin (20) étant agencées de façon alignées les unes par rapport aux autres pour le boudin de matériau respectif, les fréquences de fonctionnement des deux dispositifs HF de mesure de boudin (20) respectifs pour un boudin de matériau correspondant étant différentes l'une de l'autre, en particulier au moins d'un facteur de 10.
